# EUROPEAN PATENT SPECIFICATION

(11) **EP 4 160 129 B1**
(45) Date of publication and mention of the grant of the patent: **14.10.2026**
(21) Application number: 21813291.8
(22) Date of filing: 26.05.2021
(51) Int. Cl.: F28D 9/00, F25B 41/00, F28F 3/00, H01M 10/60

(54) **HEAT MANAGEMENT APPARATUS AND HEAT MANAGEMENT SYSTEM**
WÄRMEVERWALTUNGSVORRICHTUNG UND WÄRMEVERWALTUNGSSYSTEM
ENSEMBLE DE GESTION DE CHALEUR ET SYSTÈME DE GESTION DE CHALEUR

(30) Priority: 27.05.2020 CN 202010460054
(43) Date of publication of application: 05.04.2023
(73) Proprietor: Zhejiang Sanhua Automotive Components Co., Ltd., Hangzhou, Zhejiang 310018 (CN)
(72) Inventor: YE, Keli, Hangzhou Economic & Technological Development Area Hangzhou, Zhejiang 310018 (CN); SONG, Bin, Hangzhou Economic & Technological Development Area Hangzhou, Zhejiang 310018 (CN); WU, Linzhong, Hangzhou Economic & Technological Development Area Hangzhou, Zhejiang 310018 (CN)
(74) Representative: Maikowski & Ninnemann Patentanwälte Partnerschaft mbB
(86) International application number: PCT/CN2021/095900
(87) International publication number: WO 2021/238948

(56) References cited:
- CN-A- 102 818 404
- CN-A- 103 370 594
- CN-A- 108 068 581
- CN-U- 206 095 009
- CN-U- 207 113 674
- CN-U- 207 994 013
- DE-A1- 19 805 285
- US-A1- 2008 127 666
- US-A1- 2019 103 623

## Description

### FIELD

The present invention relates to the technical field of heat management, and in particular to a heat management apparatus and a heat management system.

### BACKGROUND

An intermediate heat exchanger, a plate evaporator and an expansion valve in a heat management system are connected through pipelines, or the plate evaporator and the expansion valve are integrated, and the intermediate heat exchanger and the integrated plate evaporator are still connected through the pipelines.

DE 198 05 285 A1 discloses an evaporator unit for an air-conditioning plant having an evaporator region through which a coolant can flow for heat-transmitting connection to a medium to be cooled down, coolant inlet channel for supplying the coolant to the evaporator region and a coolant outlet channel for draining away the coolant from the evaporator region.

### SUMMARY

An object of the present invention is to provide a heat management apparatus and a heat management system, which is beneficial to the miniaturization of a structure of the heat management apparatus.

In one aspect, a heat management apparatus is provided according to an embodiment of the present invention, which includes a throttle unit and a heat exchange core body, the throttle unit is fixedly connected with the heat exchange core body or connected with the heat exchange core body in a limited position, and the heat exchange core body includes multiple stacked plates; the heat exchange core body includes a first heat exchange portion and a second heat exchange portion, the heat management apparatus includes a refrigerant flow passage and a coolant flow passage, the coolant flow passage is located in the second heat exchange portion, the refrigerant flow passage includes a first flow passage, a second flow passage and a third flow passage, the first flow passage and the second flow passage are located in the first heat exchange portion, the third flow passage is located in the second heat exchange portion, a refrigerant in the first flow passage can exchange heat with a refrigerant in the second flow passage in the first heat exchange portion, a refrigerant in the third flow passage can exchange heat with a coolant in the coolant flow passage in the second heat exchange portion; the first heat exchange portion includes a first wall, the second heat exchange portion includes a second wall, and the first wall is arranged opposite to the second wall; and
the throttle unit includes a valve port portion, the valve port portion includes a valve port, the first flow passage is in communication with the third flow passage through the valve port, and the third flow passage is in communication with the second flow passage.

In another aspect, a heat management system is provided according to an embodiment of the present invention, which includes a heat management apparatus, a compressor and a condenser, the heat management apparatus is the above heat management apparatus, the heat management apparatus includes a first inlet, a first outlet, a second outlet and a second inlet, an outlet of the compressor is in communication with the first inlet through the condenser, the first outlet is in communication with an inlet of the compressor, the heat management system further includes a first heat exchanger and a pump, and the second outlet of the heat management apparatus is in communication with the second inlet through the first heat exchanger and the pump.

The heat management apparatus and the heat management system provided according to the embodiment of the present invention include the first heat exchange portion and the second heat exchange portion, the refrigerant flow passage of the heat management apparatus includes the first flow passage, the second flow passage and the third flow passage, the first flow passage and the second flow passage are located in the first heat exchange portion, the refrigerant in the first flow passage can exchange heat in the first heat exchange portion with the refrigerant in the second flow passage, the third flow passage and the coolant flow passage are located in the second heat exchange portion, the refrigerant in the third flow passage can exchange heat in the second heat exchange portion with the coolant in the coolant flow passage, the first flow passage is in communication with the third flow passage through the valve port of the throttle unit, the third flow passage is in communication with the second flow passage, and the first wall of the first heat exchange portion is arranged opposite to the second wall of the second heat exchange portion, so that the heat management apparatus has a compact structure, which is beneficial to the minimization.

### BRIEF DESCRIPTION OF THE DRAWINGS

FIG. 1 is a schematic block diagram showing a connection of a heat management system;
FIG. 2 is a schematic block diagram showing another connection of the heat management system;
FIG. 3 is a schematic perspective view of a first embodiment of a heat management apparatus;
FIG. 4 is a schematic partial exploded view of the heat management apparatus of FIG. 3 viewed from a first perspective;
FIG. 5 is a schematic partial exploded view of the heat management apparatus of FIG. 3 viewed from a second perspective;
FIG. 6 is a schematic top view of the heat management apparatus of FIG. 3;
FIG. 7 is a first schematic cross-sectional view of FIG. 6 taken along line A-A;
FIG. 8 is schematic cross-sectional view of FIG. 6 taken along line B-B;
FIG. 9 is a schematic perspective view of a connecting portion;
FIG. 10 is a schematic enlarged view of portion A in FIG. 7;
FIG. 11 is a schematic enlarged view of portion B in FIG. 7;
FIG. 12 is a schematic perspective view of a second embodiment of the heat management apparatus;
FIG. 13 is a second schematic enlarged view of portion A;
FIG. 14 is another schematic cross-sectional view of FIG. 6 taken along line A-A;
FIG. 15 is a schematic structural view of a plate of a second heat exchange portion in FIG. 14;
FIG. 16 is a schematic enlarged view of portion A in FIG. 14;
FIG. 17 is a schematic perspective view of a fourth embodiment of the heat management apparatus;
FIG. 18 is a schematic cross-sectional view of FIG. 17;
FIG. 19 is a schematic cross-sectional view of the thermal management apparatus; and
FIG. 20 is a schematic view showing a connection of a pipe body with a first wall and a second wall.

### DETAILED DESCRIPTION OF THE EMBODIMENTS

A heat management system and a heat management apparatus according to the technical solution of the present invention may have various embodiments, at least one of which can be applied to a vehicle heat management system, and at least one of which can be applied to other heat management system including a household heat management system or a commercial heat management system, etc.. A heat management system for vehicles and a heat management apparatus for vehicles are described as an example with reference to the drawings hereinafter.

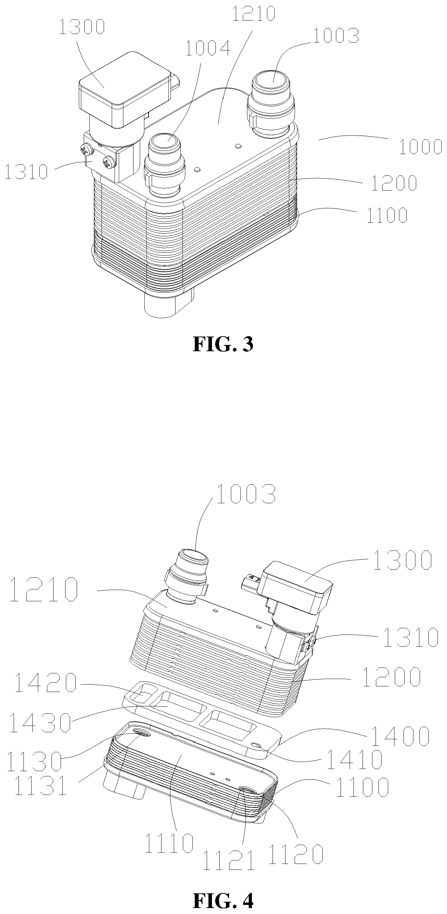

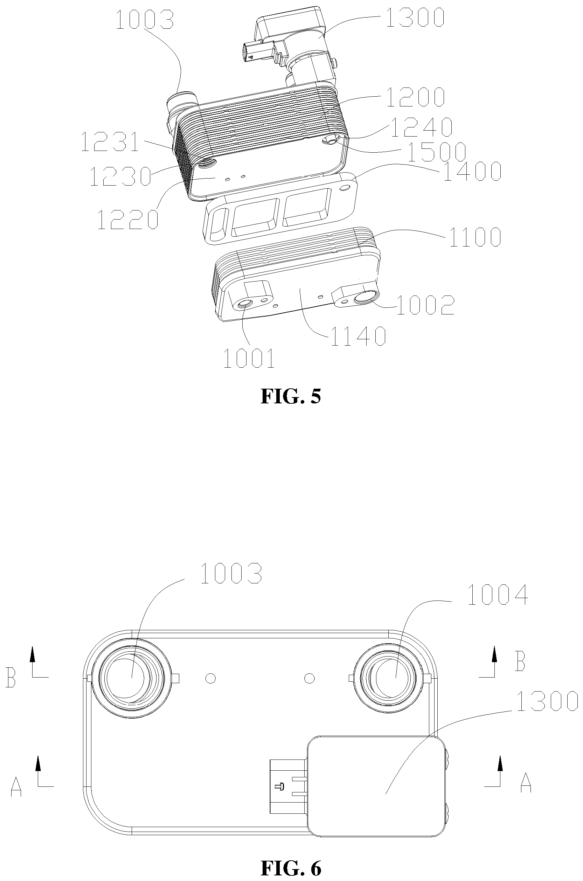

Referring to FIG.3 to FIG. 11, a heat management apparatus 1000 includes a heat exchange core body and a throttle unit 1300, the heat exchange core body includes multiple stacked plates, a first plate body 1140 and a second plate body 1210, and the multiple plates are located between the first plate body 1140 and the second plate body 1210 along a stacking direction of the multiple plates. Specifically, the heat exchange core body includes a first heat exchange portion 1100, a connecting plate body 1400 and a second heat exchange portion 1200. In this embodiment, the first plate body 1140 is a part of the first heat exchange portion 1100, the second plate body 1210 is a part of the second heat exchange portion 1200, the first heat exchange portion 1100 further includes a top plate, multiple plates of the first heat exchange portion 1100 are stacked from the first plate body 1140 to the top plate. The second heat exchange portion 1200 further includes a bottom plate, and multiple plates of the second heat exchange portion 1200 are stacked from the bottom plate to the second plate body 1210. The connecting plate body 1400 is located between the top plate and the bottom plate, and is fixed to the top plate and the bottom plate by welding. In other embodiments, the heat exchange core body may not be provided with the top plate and the bottom plate, and the connecting plate body 1400 is directly fixed to the plates of the first heat exchange portion 1100 and the plates of the second heat exchange portion 1200 by welding. It should be noted that, for the convenience of description, it is defined that the second heat exchange portion 1200 is located above the first heat exchange portion 1100. Alternatively, the connecting plate body 1400 may not be provided. The heat exchange core body has a set of structures, the heat exchange core body includes the first plate body 1140 and the second plate body 1210, and multiple plates located between the first plate body 1140 and the second plate body 1210 along the stacking direction of the plates. The plates are located between the first plate body 1140 and the second plate body 1210 along the stacking direction of the plates, and multiple plates are stacked from the first plate body 1140 to the second plate body 1210, or in other words, multiple plates are stacked from the second plate body 1210 to the first plate body 1140.

The first heat exchange portion 1100 and the second heat exchange portion 1200 both include multiple stacked plates, the plates of the first heat exchange portion 1100 may have the same structure with the plates of the second heat exchange portion 1200, and the structure of the plates of the first heat exchange portion 1100 are described as an example to describe the structure of the plates. In the first heat exchange portion 1100, a first inter-plate passage and a second inter-plate passage are formed after adjacent plates are stacked except for the two plates respectively closest to the first plate body 1140 and the top plate, one side of an inner side plate is the first inter-plate passage and another side of the inner side plate is the second inter-plate passage. In this embodiment, the adjacent plates have the same structure. For ease of description, one of the two adjacent plates is defined as a first plate, the other one is defined as a second plate. For example, if the first plate and one of the two adjacent second plates form the first inter-plate passage, and the first plate and the other one of the two adjacent second plates forms the second inter-plate passage. The first inter-plate passage is basically not in communication with the second inter-plate passage. A fluid in the first inter-plate passage can exchange heat with a fluid located in the second inter-plate passage. It should be noted that, that the first inter-plate passage is basically not in communication with the second inter-plate passage, means that the first inter-plate passage is not in communication with the second inter-plate passage inside the first heat exchange portion 1100, and there may be a case that the first inter-plate passage is in communication with the second inter-plate passage after the heat management apparatus 1000 becomes a part of the heat management system. A thickness of main body portions of the connecting plate body, the top plate, the bottom plate is larger than a thickness of a main body portion of the plates, which has the function of enhancing the mechanical strength of the heat management apparatus 1000.

The heat management apparatus 1000 includes a refrigerant flow passage, a coolant flow passage, a first inlet 1001, a first outlet 1002, a second inlet 1003 and a second outlet 1004, and the first inlet 1001 is in communication with the first outlet 1002 through the refrigerant flow passage, that is, the first inlet 1001 is an inlet of the refrigerant flow passage, and the first outlet 1002 is an outlet of the refrigerant flow passage; the second inlet 1003 is in communication with the second outlet 1004 through the coolant flow passage, that is, the second inlet 1003 is an inlet of the coolant flow passage, and the second outlet 1004 is an outlet of the coolant flow passage. The second outlet 1004, the second inlet 1003 and the coolant flow passage are formed in the second heat exchange portion 1200, the first outlet 1002 and the first inlet 1001 are formed in the first heat exchange portion 1100, and the second outlet 1004 and the second inlet 1003 are located on one side of the heat management apparatus 1000 and the first outlet 1002 and the first inlet 1001 are located on another opposite side of the heat management apparatus 1000 along the stacking direction of the plates. The first inlet 1001 and the first outlet 1002 may be formed in a pipe or a block which is fixedly connected to the first plate body 1140, and the second inlet 1003 and the second outlet 1004 may be formed in a pipe or a block which is fixedly connected to the first plate body 1140. In other embodiments, the first inlet 1001 and the first outlet 1002 may be formed in the first plate body 1140, and the second inlet 1003 and the second outlet 1004 may be formed in the second plate body 1210.

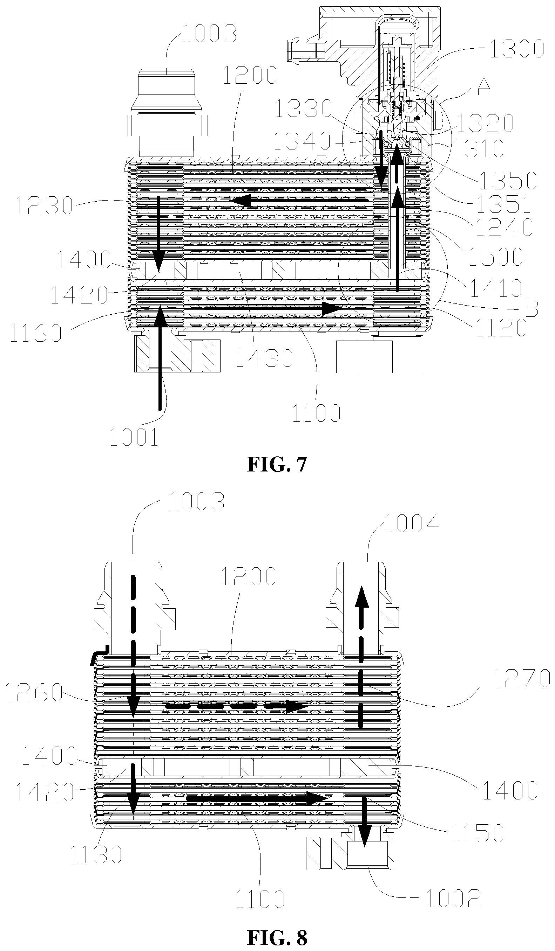

Referring to FIG. 7 and FIG. 8, the refrigerant flow passage includes a first flow passage, a second flow passage and a third flow passage, the first flow passage and the second flow passage are formed in the first heat exchange portion 1100, the first inter-plate passage of the first heat exchange portion 1100 is a part of the first flow passage, and the second inter-plate passage of the first heat exchange portion 1100 is a part of the second flow passage.

The first heat exchange portion 1100 at least includes a fifth hole passage 1160, a second hole passage 1120, a third hole passage 1130 and a fourth hole passage 1150, and the above hole passages extend along the stacking direction of the plates of the first heat exchange portion 1100. The first flow passage includes the fifth hole passage 1160, the first inter-plate passage located between the plates and the second hole passage 1120, and the fifth hole passage 1160 is in communication with the second hole passage 1120 through the first inter-plate passage of the first heat exchange portion 1100. In this embodiment, the first inlet 1001 is in communication with the fifth hole passage 1160. When the heat management apparatus 1000 operates, the refrigerant flows into the fifth hole passage 1160 from the first inlet 1001, and then flows into the first inter-plate passage of the first heat exchange portion 1100, and then flows into the second hole passage 1120 after heat exchanging with the refrigerant in the second inter-plate passage of the first heat exchange portion 1100. The second hole passage 1120 has an opening on the top plate of the first heat exchange portion 1100, and the refrigerant flows out of the first heat exchange portion 1100 from the opening on the top plate of the first heat exchange portion 1100. The second flow passage includes the third hole passage 1130, the second inter-plate passage located between the plates, and the fourth hole passage 1150, and the third hole passage 1130 is in communication with the fourth hole passage 1150 through the second inter-plate passage of the first heat exchange portion 1100. The first outlet 1002 is in communication with the fourth hole passage 1150. When the heat management apparatus 1000 operates, the refrigerant in the second flow passage flows into the second inter-plate passage of the first heat exchange portion 1100 through the third hole passage 1130 and exchanges heat with the refrigerant in the first inter-plate passage, and then flows into the fourth hole passage 1150. The refrigerant in the fourth hole passage 1150 flows out of the heat management apparatus 1000 through the first outlet 1002.

A first inter-plate passage of the second heat exchange portion 1200 is a part of the third flow passage, and a second inter-plate passage of the second heat exchange portion 1200 is a part of the coolant flow passage. The second heat exchange portion 1200 at least includes a first hole passage 1240, a sixth hole passage 1230, a seventh hole passage 1260 and an eighth hole passage 1270, the first hole passage 1240 and the sixth hole passage 1230 are a part of the third flow passage, and the seventh hole passage 1260 and the eighth hole passage 1270 are a part of the coolant flow passage. The third flow passage includes the first hole passage 1240, the sixth hole passage 1230 and the first inter-plate passage located in the second heat exchange portion 1200, and the first hole passage 1240 is in communication with the sixth hole passage 1230 through the first inter-plate passage of the second heat exchange portion 1200. The coolant flow passage includes the seventh hole passage 1260, the second inter-plate passage located in the second heat exchange portion 1200 and the eighth hole passage 1270, and the seventh hole passage 1260 is in communication with the eighth hole passage 1270 through the second inter-plate passage of the second heat exchange portion 1200. In this embodiment, the second inlet 1003 is in communication with the seventh hole passage 1260, and the second outlet 1004 is in communication with the eighth hole passage 1270. When the heat management apparatus 1000 operates, the coolant flows into the seventh hole passage 1260 through the second inlet 1003, and then flows into the second inter-plate passage of the second heat exchange portion 1200 and exchanges heat with the refrigerant in the third flow passage, and then flows into the eighth hole passage 1270, and finally flows out of the heat management apparatus 1000 through the second outlet 1004.

Referring to FIG. 4, FIG. 5, FIG. 7 and FIG. 8, the connecting plate body 1400 is located between the first heat exchange portion 1100 and the second heat exchange portion 1200 along the stacking direction of the plates. Specifically, the first heat exchange portion 1100 includes a first wall 1110, the second heat exchange portion 1200 includes a second wall 1220. In this embodiment, the first wall 1110 is formed on the top plate of the first heat exchange portion 1100, the second wall 1220 is formed on the bottom plate of the second heat exchange portion 1200, a lower side wall of the connecting plate body 1400 is fixed to the first wall 1110 by welding, and an upper side wall of the connecting plate body 1400 is fixed to the second wall 1220 by welding. The first wall 1110 is arranged opposite to the second wall 1220, the opposite arrangement described herein includes indirect opposite arrangement and direct opposite arrangement. The indirect opposite arrangement means that there are other objects between the first wall 1110 and the second wall 1220, such as the connecting plate body 1400. The connecting plate body 1400 may not be provided between the first wall 1110 and the second wall 1220, that is, the first wall 1110 is arranged directly opposite to the second wall 1220, and the first wall 1110 is fixed to the second wall 1220 by welding. The connecting plate 1400 further includes a first through hole 1410 and a second through hole 1420. The first through hole 1410 and the second through hole 1420 extend through the connecting plate 1400, and the first through hole 1410 and the second through hole 1420 have openings respectively on an upper wall and a lower wall of the connecting plate body 1400. The sixth hole passage 1230 is in communication with the third hole 1130 through the second through hole 1420, that is, the third flow passage is in communication with the second flow passage through the second through hole 1420. Specifically, the sixth hole passage 1230 has a second opening 1231 on the second wall, and at least part of the second opening 1231 faces the second through hole 1420 and is in communication with the second through hole 1420. The third hole passage 1130 has a first opening 1131 on the first wall, at least part of the first opening 1131 faces the second through hole 1420, and the first opening 1131 is in communication with the second opening 1231 through the second through hole 1420, so that the third hole passage 1130 is in communication with the sixth hole passage 1230 through the second through hole 1420. In this embodiment, the first opening 1131 and the second opening 1231 are staggered, and the second through hole 1420 extends narrowly and long, which is beneficial to the smooth flow of the refrigerant at the second through hole 1420. Alternatively, the first opening 1131 and the second opening 1231 can be opposite. The refrigerant in the third flow passage flows into the second flow passage of the first heat exchange portion 1100 through the second through hole 1420 after heat exchange in the second heat exchange portion 1200 with the coolant in the coolant flow passage, and then exchanges heat in the first heat exchange portion 1100 with the refrigerant in the first flow passage.

The first through hole 1410 is in communication with the second hole passage 1120. Specifically, the second hole passage 1120 forms a first communication port 1121 on the first wall 1120, and at least part of the communication port 1121 faces the first through hole 1410 and is in communication with the first through hole 1410. The first wall 1110 is sealed to a corresponding position of the connecting plate body 1400, so as to prevent the refrigerant from leaking from a connection between the first heat exchange portion 1100 and the connecting plate body 1400. The second wall 1220 is sealed to a corresponding position of the connecting plate body 1400, so as to prevent the refrigerant from leaking from a connection between the second wall 1220 and the connecting plate body 1400. In addition, in this embodiment, the connecting plate body 1400 further includes two square holes 1430. The square holes 1430 are used to reduce a weight of the connecting plate 1400 and further reduce a weight of the heat management apparatus 1000. The two square holes 1430 are larger than the first through hole 1410 and the second through hole 1420, and the square holes 1430 can reduce the heat conduction between the first heat exchange portion 1100 and the second heat exchange portion 1200. The two square holes 1430 are located near the middle of the connecting plate 1400 with a large temperature difference between the first heat exchange portion 1100 and the second heat exchange portion 1200, which is not only beneficial to reducing the heat conduction, but also beneficial to the balanced mass distribution of the heat management apparatus.

Referring to FIGS. 7 to 10, the throttle unit 1300 includes a valve core, a valve port portion 1350 and a valve seat 1370, and a valve port 1351 is formed in the valve port portion 1350. In this embodiment, the valve core is a valve needle 1320, and the valve needle 1320 can move relative to the valve port 1350 to adjust an opening of the valve port 1351. The throttle unit 1300 further includes a guide portion 1380, the guide portion 1380 is fixed to the valve seat 1370, and the guide portion 1380 can guide the valve needle 1320 and prevent the movement of the valve needle 1320 from deviating from an axial direction. The valve port portion 1350 is fixedly connected to the guide portion 1380. In this embodiment, the valve port portion 1350 is integrally arranged with the guide portion 1380, and the valve needle 1320 and the valve port 1351 are substantially coaxial. The throttle unit 1300 further includes a first valve body 1310 and a connecting portion 1340, the first valve body 1310 includes a first penetrating hole 1311, the first penetrating hole 1311 has an opening on an upper wall of the first valve body 1310, the first penetrating hole 1311 has a third opening 1312 on a bottom wall of the first valve body 1310, the bottom wall of the first valve body 1310 is relatively fixed to the second plate body 1210, such as by welding, bonding or threaded connection. The second plate body 1210 has a fourth opening 1211, the fourth opening 1211 is in communication with the first hole passage 1240, the third opening 1312 is arranged opposite to the fourth opening 1211, and the third opening 1312 is in communication with the fourth opening 1211, so that the third opening 1312 is in communication with the first hole passage 1240. The valve seat 1370 protrudes into a chamber formed by the first penetrating hole 1311 and is fixed to a wall of the first penetrating hole 1311. The valve seat 1370 is fixed to the wall of the first penetrating hole 1311 by threaded connection, insertion or welding. Compared with the bottom wall of the first valve body 1310, the valve seat 1370 is relatively closer to the upper wall of the first valve body. At least part of the connecting portion 1340 protrudes into the chamber formed by the first penetrating hole 1311 and is fixed to the wall of the first penetrating hole 1311. In this embodiment, the first penetrating hole 1311 is formed with a step surface, and the connecting portion 1340 is fixed to the step surface. Compared with the upper wall of the first valve body, the connecting portion 1340 is relatively closer to the lower wall of the first valve body. A space between the valve seat 1370 and the connecting portion 1340 forms a valve chamber 1330 along an extending direction of the first penetrating hole 1311, and the valve port 1351 is in communication with the valve chamber 1330 when the valve port 1351 is opened by the valve needle 1320.

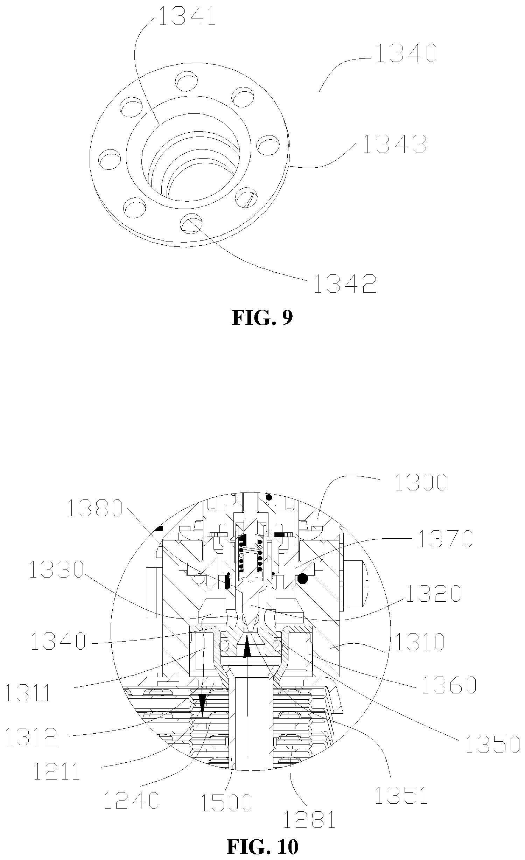

Referring to FIG. 9 and FIG. 10, the connecting portion 1340 further includes a communication portion 1342, a fixing portion 1343 and an accommodating portion 1341. The fixing portion 1343 is fixed to the wall of the first penetrating hole 1311. In this embodiment, the throttle unit 1300 further includes a support ring 1360, the support ring 1360 is located in the first penetrating hole 1311, and the support ring 1360 is threadedly fixed to the first valve body 1310, which further limits the fixing portion 1343 relative to the step surface of the first valve body 1310. In other embodiments, one end of the support ring 1360 abuts against the second plate body 1210, and another end of the support ring 1360 abuts against the fixing portion 1343. During welding, the connecting portion 1340 is fixed to the step surface of the first valve body 1310 by the support ring 1360, so as to prevent the connecting portion 1340 from shaking. An accommodating chamber is formed in the accommodating portion 1341, at least part of the valve port portion 1350 is located in the accommodating chamber of the accommodating portion 1341, an outer wall of the valve port portion 1350 is sealed to an inner wall of the accommodating portion 1341, for example, a sealing ring is provided between the outer wall of the valve port portion 1350 and the inner wall of the accommodating portion 1341.

The refrigerant flow passage further includes a fourth flow passage. In this embodiment, the fourth flow passage is located in the heat exchange core body, and the fourth flow passage is configured to communicate the first flow passage with the third flow passage. Specifically, the third flow passage includes the first hole passage 1240, the first flow passage includes the second hole passage 1120, at least part of the fourth flow passage is located in the first hole passage 1240, one end of the fourth flow passage is in communication with the second hole passage 1120, and another end of the fourth flow passage is in communication with the valve port 1351, so that the refrigerant in the first heat exchange portion 1100 can flow into the valve port 1351 through the fourth flow passage.

The heat management apparatus 1000 includes a pipe body 1500 which is hollow, two ends of the pipe body 1500 are open, at least part of the fourth flow passage is located in the pipe body 1500, most of the pipe body 1500 is located in the first hole passage 1240, or in other words, the pipe body 1500 is accommodated in the first hole passage 1240. Specifically, each first plate of the second heat exchange portion 1200 includes a first orifice 1204, and multiple orifices are stacked to form the first hole passage 1240. The first hole passage 1240 is located on a circumferential side of the pipe body 1500 along a radial direction of the first hole passage 1240, or in other words, at least part of the fourth flow passage is accommodated in the first orifice 1204. Along an axial direction of the first hole passage 1240, at least part of the pipe body 1500 is located between the valve port 1351 and the second wall 1220, a second end portion of the pipe body 1500 is located in the first through hole 1410, and an outer wall of the second end portion of the pipe body 1500 is sealedly fixed to an inner wall of the first through hole 1410, so that a chamber of the first through hole 1410 is in communication with a chamber of the pipe body 1500, and thus the first flow passage is in communication with the chamber of the pipe body 1500. It can be known that the second wall 1220 has an opening for accommodating the pipe body 1500. In this embodiment, the fourth flow passage includes the chamber of the pipe body 1500, and the first flow passage can be in communication with the valve port 1351 through the fourth flow passage. A first end portion of the pipe body 1500 is located in the accommodating chamber of the accommodating portion 1341, and an outer wall of the first end portion of the pipe body 1500 is sealedly fixed to an inner wall of the accommodating portion 1341, and the sealing may be realized by welding.

Along the extending direction of the first penetrating hole 1311, the first end portion of the pipe body 1500 is closer to the second heat exchange portion 1200 than the valve port portion 1350, the valve port portion 1350 is relatively close to the valve seat 1370, and the opening of the pipe body 1500 faces the valve port 1351, so that the chamber of the pipe body 1500 is in communication with the valve port 1351. Along a radial direction of the first penetrating hole 1311, the communication portion 1342 is located between the fixing portion 1343 and the accommodating portion 1341, and the valve chamber 1330 is in communication with the first hole passage 1240 through the communication portion 1342. In this embodiment, the communication portion 1342 is a hole which extends through the connecting portion 1340. When the heat management apparatus 1000 operates, the refrigerant flowing through the pipe body 1500 is throttled at the valve port 1351, flows into the valve chamber 1330, and then flows into the first hole passage 1240 through the communication portion 1343, that is, flows into the third flow passage. In this embodiment, the connecting portion 1340 is integrally formed by stamping plates, which substantially has a horn shape. In other embodiments, the fixing portion 1343 may be fixed between the second plate body 1210 and the first valve body 1310, or the fixing portion 1343 is accommodated in the fourth opening 1211, and is fixed to an inner wall of the fourth opening 1211, so that there is no need to provide the support ring 1360, which can relatively reduce the component and the assembly process. In addition, the connecting portion 1340 may only include the accommodating portion 1341, at least part of the valve port portion 1350 is located in the chamber formed by the accommodating portion, a side wall of the valve port portion 1350 is sealedly fixed to the inner wall of the accommodating portion 1341, the first end portion of the pipe body 1500 is located in the chamber formed by the accommodating portion 1341 or the accommodating portion 1341 is located in the first end portion, and a wall of the first end portion is sealedly fixed to a wall of the accommodating portion 1341, and the sealing is generally realized by welding.

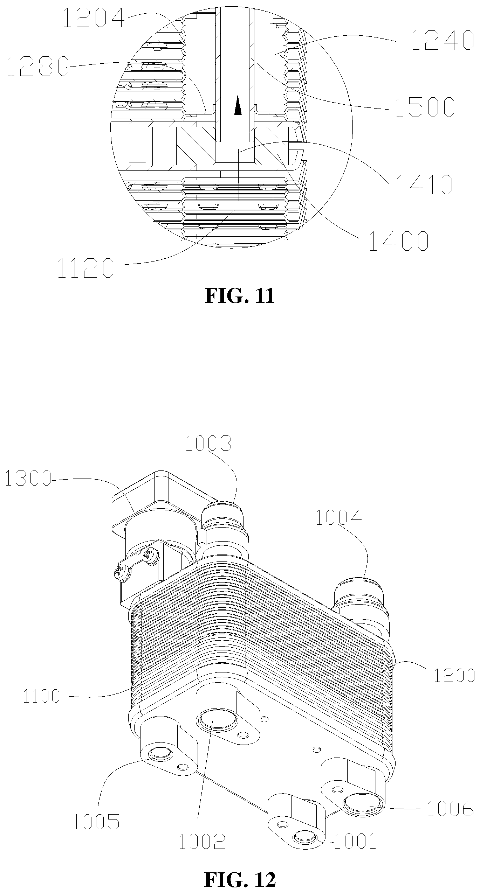

Referring to FIG. 10 and FIG. 11, the second heat exchange portion 1200 includes a first separation plate 1280, the first separation plate 1280 and one plate of the second heat exchange portion 1200 have an integral structure, the first separation plate 1280 forms a bottom wall of the first hole passage 1240 along the axial direction of the first hole passage 1240, the first separation plate 1280 includes a through hole for accommodating the pipe body 1500, and a wall of the first separation plate 1280 is fixed to and sealed to a wall of the pipe body 1500. In addition, the second heat exchange portion 1200 further includes a second separation plate 1281, the second separation plate 1281 is closer to the throttle unit 1300 than the first separation plate 1280, the second separation plate 1281 is located in the first hole passage 1240, the second separation plate 1281 and one plate of the second heat exchange portion 1200 have an integral structure, the second separation plate 1281 also includes a through hole for accommodating the pipe body, and a wall of the second separation plate 1281 is sealed to an outer wall of the pipe body 1500, so that the second separation plate 1281 can change a flow direction of the refrigerant, and the second heat exchange portion 1200 has multiple flow routes.

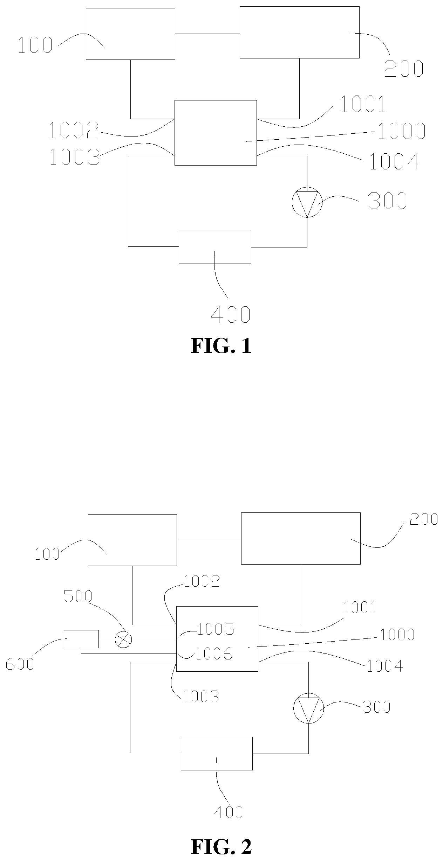

Referring to FIG. 7 and FIG. 8, an operation mode of the heat management apparatus 1000 is described with reference to the heat management system shown in FIG. 1. The heat management system includes a compressor 100, a condenser 200 and a heat management apparatus 1000, an outlet of the compressor 100 is in communication with a first inlet 1001 of the heat management apparatus 1000 through the condenser 200, and a first outlet 1002 of the heat management apparatus 1000 is in communication with an inlet of the compressor 100. The heat management system further includes a first heat exchanger 400 and a pump 300, a second inlet 1003 of the heat management apparatus 1000 is in communication with a second outlet 1004 of the heat management apparatus through the first heat exchanger 400 and the pump 300, or further, the coolant flow passage of the heat management apparatus 1000, the first heat exchanger 400 and the pump 300 form a coolant system or a part of the coolant system, and the coolant flows in the coolant system driven by the pump 300. When the heat management apparatus operates The high-temperature and high-pressure refrigerant releases heat in the condenser 200; the relatively low-temperature and high-pressure refrigerant flows into the refrigerant flow passage of the heat management apparatus 1000 through the first inlet 1001, that is, the first flow passage of the first heat exchange portion 1100, and then flows into the chamber of the pipe body 1500; the refrigerant flows into the valve chamber 1330 after being throttled and depressurized by the valve port 1351, and then flows into the first hole passage 1240, that is, the third flow passage; the refrigerant absorbs heat of the coolant in the third flow passage to lower the temperature of the coolant, and then flows into the sixth flow passage 1230; the refrigerant in the third flow passage flows into the second flow passage through the second through hole 1420 of the connecting pipe body 1400, and then is discharged out of the heat management apparatus 1000 through the first outlet 1002. The refrigerant in the second flow passage can exchange heat in the first heat exchange portion 1100 with the refrigerant in the first flow passage, which further lowers the temperature of the refrigerant in the first flow passage, and increases the temperature of the refrigerant in the second flow passage, and is beneficial to reducing the liquid hammer of the compressor. The coolant in the coolant flow passage flows into the first heat exchanger 400 to lower the temperature of the battery or other devices. The heat management apparatus 1000 includes the first heat exchange portion 1100 and the second heat exchange portion 1200, the first heat exchange portion 1100 and the second heat exchange portion 1200 are fixed by the connecting plate body 1400, the first heat exchange portion 1100 exchanges heat by refrigerant-refrigerant, the second heat exchange portion 1200 exchanges heat by refrigerant-coolant, the refrigerant of the first heat exchange portion 1100 is in communication with the throttle unit 1300 through the pipe body 1500, the pipe body 1500 is arranged inside the heat management apparatus 1000, the throttle unit 1300 is fixed to the second plate body of the second heat exchange portion 1200, the throttled refrigerant exchanges heat in the second heat exchange portion 1200 with the coolant to lower the temperature of the coolant, and the pipe body 1500 is arranged inside the heat management apparatus 1000, which relatively reduces a length of the heat management apparatus along the stacking direction of the plates, or in other words, reduces a volume of the heat management apparatus, and can effectively reduce the external damage to the pipe body, so as to improve the service life of the heat management apparatus.

Referring to FIG. 2 and FIG. 12, FIG. 2 is another embodiment of the heat management system. In this embodiment, compared with the embodiment shown in FIG. 1, the heat management apparatus 1000 further includes a third outlet 1005 and a third inlet 1006. The third outlet 1005 is in communication with the second hole passage 1120, so that the refrigerant in the second hole passage 1120 can flow into the throttle unit 1300 through the pipe body 1500 and can be discharged from the third outlet 1005. The third inlet 1006 is in communication with the third hole passage 1130, that is, the refrigerant flowing into the third hole passage 1130 includes not only the refrigerant flowing from the second heat exchange portion 1200, but also the refrigerant flowing from the third inlet 1006. In this embodiment, the refrigerant in the first flow passage of the heat management apparatus 1000 flows into the throttle unit 1300 through the pipe body 1500 or flows into the throttle unit 1300 through the third outlet 1005, and then flows into the second heat exchange portion 600 to absorb the external heat after being throttled by the throttle unit 500; and then the refrigerant flows into the first heat exchange portion 1100 of the heat management apparatus through the third inlet 1006, and finally flows into the compressor 100 after being discharged from the first outlet 1002. The heat management apparatus 1000 is added with the third outlet 1005 and the third inlet 1006 in the first heat exchange portion 1100, so that the second heat exchange portion 600 can be connected to the heat management system as a new evaporator, and the heat management apparatus 1000 has a higher integration.

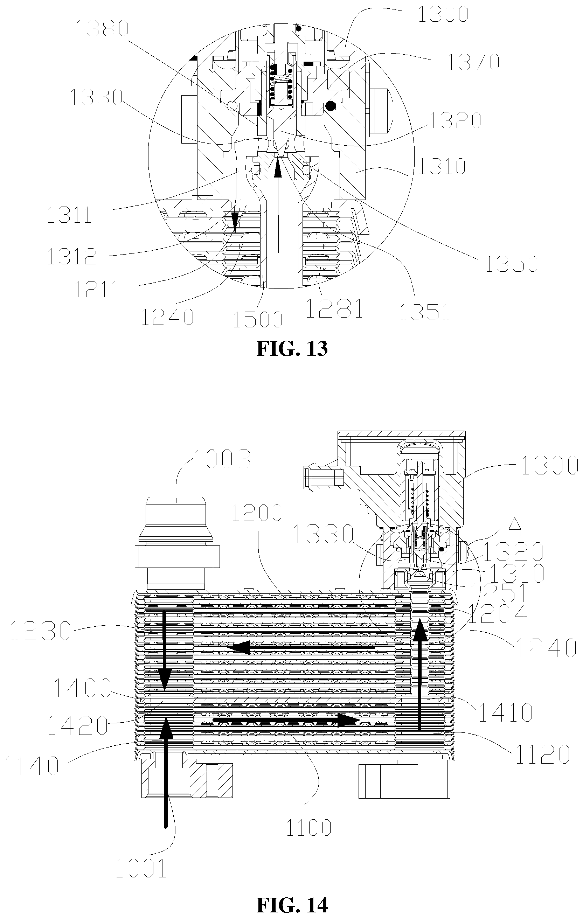

Referring to FIG. 13, the solution shown in FIG. 13 is that the heat management apparatus does not include the connecting portion 1340. At least part of the valve port portion 1350 is accommodated in a chamber formed by the first end portion of the pipe body 1500, and a side wall of the valve port portion 1350 is sealed to a wall of the first end portion. Alternatively, in other embodiments, the valve port portion 1350 includes a communication chamber, the valve port 1351 is located above the communication chamber, the valve port 1351 is in communication with the communication chamber, the first end portion of the pipe body 1500 is located in the communication chamber, and an outer wall of the first end portion of the pipe body 1500 is fixedly connected to and is sealed to a wall forming the communication chamber. In this way, the valve port 1351 is in communication with the chamber of the pipe body 1500. Since there is no connecting portion 1340, the throttled refrigerant directly flows into the first hole passage 1240 after flowing into the valve chamber 1330, which not only reduces the components, but also reduces the mounting steps. The valve port portion 1350 shown in FIG. 13 and the first end portion of the pipe body 1500 are located in the first penetrating hole 1311 of the first valve body, and the valve port portion 1350 and the first end portion of the pipe body 1500 can be located in the first hole passage 1240 after being fixed, so that a length of the first valve body along the radial direction of the first hole passage 1240 can be reduced, and the heat management apparatus has a compact volume.

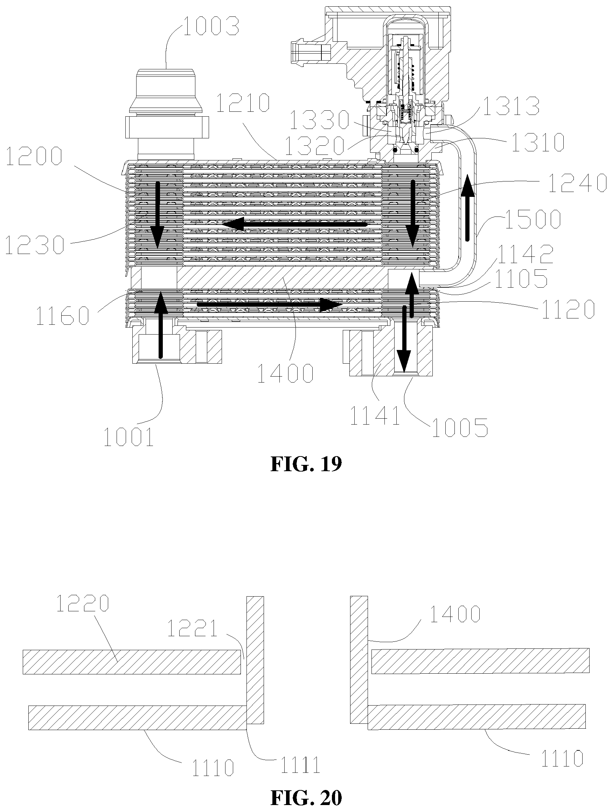

Referring to FIG. 20, the heat management apparatus may not include the connecting plate body 1400, and the same part can make reference to FIG. 7. The second end portion of the pipe body 1500 is located in a first communication port 1111, and an outer wall of the second end portion of the pipe body 1500 is sealed to a wall forming the first communication port 1111, so that the refrigerant in the second hole passage 1120 can flow into the chamber of the pipe body 1500. The second wall 1220 includes a second communication port 1221, the pipe body 1500 is accommodated in the second communication port 1221, and the first separation plate 1280 can be a part of the second wall 1220 or a part of a plate adjacent to the second wall 1220, so that the refrigerant in the first hole passage 1240 may not leak between the first heat exchange portion 1100 and the second heat exchange portion 1200. Alternatively, in order to increase a sealing surface between the pipe body 1500 and the wall of the first communication port 1111, the wall of the communication port 1111 may be a protrusion relative to a main body of the first wall 1110. Compared with the heat management apparatus 1000 with the connecting plate body 1400, the weight in this embodiment is light and the volume is small.

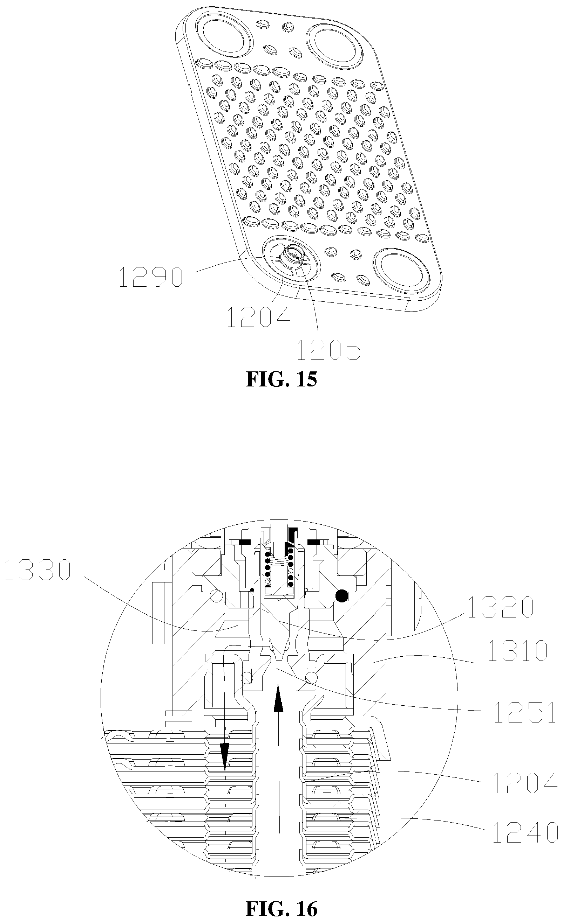

Referring to FIGS. 14 to 16, compared with the embodiment shown in FIG. 7, the heat management apparatus 1000 is not separately provided with the pipe body 1500, each first plate of the second heat exchange portion 1200 includes at least one first orifice 1204 and a second orifice 1205, a wall forming the second orifice 1205 includes a first flange 1290, the first flange 1290 is folded from a main body of the first plate of the second heat exchange portion 1200 toward the throttle unit 1300, the first flange 1290 is inserted into an upper first flange adjacent to the first flange 1290, and the adjacent two flanges 1290 are sealed, inner walls of the first flanges 1290 of the multiple plates form a wall of the fourth flow passage, and part of the first flange 1290 adjacent to the valve port portion 1350 is located in the accommodating portion 1341, so that the fourth flow passage is in communication with the valve port 1351, and the first flange 1290 adjacent to the valve port portion 1350 is sealed to the wall of the accommodating portion 1341. Four first orifices 1204 are defined on an outer side of the second orifice 1205 along the radial direction of the first hole passage, and the first orifices 1204 form the first hole passage 1240. In other embodiments, each plate includes at least one first orifice 1204. The third opening 1312 faces the first hole passage 1240, which realizes the communication between the valve chamber 1330 and the first hole passage 1240. In other embodiments, the connecting portion 1340 may be inserted into and be sealedly fixed to an inner wall of the first flange 1290. The valve port portion 1350 can be directly and sealedly fixed to the inner wall or an outer wall of the first flange 1290 in a case that the throttle unit 1300 does not include the connecting portion 1340, so as to realize the communication between the valve port 1351 and the fourth flow passage. It can be known that in the plates of the second heat exchange portion 1200, the plate closest to the first heat exchange portion 1100 includes the second orifice 1205 and the first separation plate 1280 and does not include the first orifice1204, and the first separation plate 1280 is the bottom wall of the first hole passage 1240.

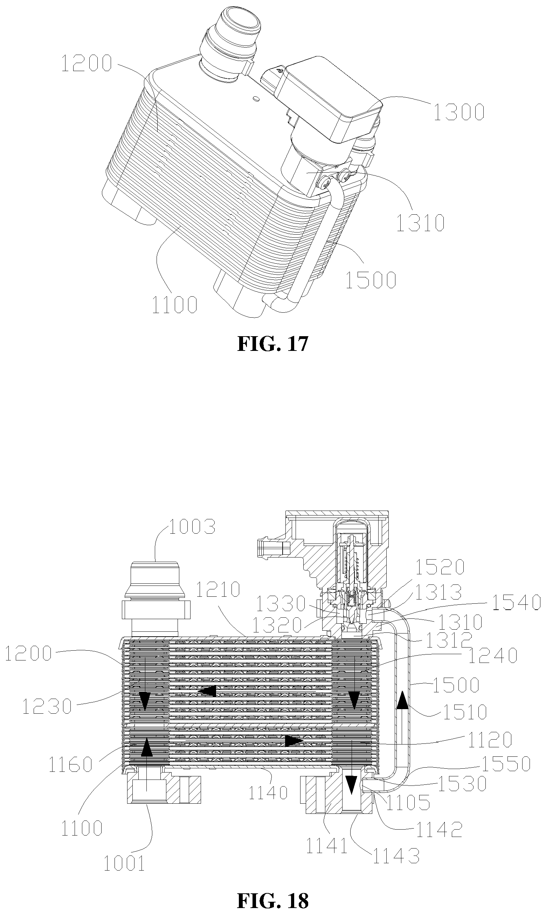

Referring to FIGS. 17 to 19, in this embodiment, the first valve body 1310 is fixedly connected to the second plate body 1210, the second plate body 1210 has an opening for accommodating part of the first valve body 1310, the first penetrating hole 1311 has a third opening 1312 on the bottom wall of the first valve body 1310, and the third opening 1312 faces the first hole passage 1240, the first penetrating hole 1311 includes a chamber for accommodating the valve port portion 1350, the side wall of the valve port portion 1350 is sealed to an inner wall of the first penetrating hole 1311, and the fourth flow passage is located outside the heat exchange core body.

The heat management apparatus 1000 includes a connecting body, the connecting body includes the fourth flow passage, the connecting body includes the first end portion 1520 and the second end portion 1530. Along the axial direction of the first hole passage 1240, the first end portion 1520 is located on one side of the heat exchange core body and is relatively close to the second plate body 1210, and the second end portion1530 is located on another opposite side of the heat exchange core body and is relatively close to the first plate body 1140, and the first end portion 1520 and the second end portion 1530 both include an opening which is in communication with the fourth flow passage. In this embodiment, the connecting body is the pipe body 1500, the fourth flow passage includes the chamber of the pipe body 1500, the pipe body 1500 is one form of the connecting body, and a plate body or a block body may be feasible forms of the connecting body. The heat management apparatus 1000 includes a first transition passage 1313 and a second transition passage 1105, the first transition passage 1313 is formed in the first valve body 1310, the first transition passage 1313 is located on an upper side of the second plate body 1210, the first transition passage 1313 has an opening on a wall of the first valve body 1310, the first end portion 1520 is located in the first transition passage 1313 and is sealedly fixed to an inner wall of the first transition passage 1313, so that the fourth flow passage is in communication with the valve chamber 1330. The second transition passage 1105 is located at one end of the second hole passage 1120 and is in communication with the second hole passage 1120. In this embodiment, the second transition passage 1105 is located in the first plate body 1140 or is fixedly connected to the first plate body 1140, the second end portion 1530 is located in the second transition passage 1105, and a wall of the second end portion 1530 is sealedly fixed to a wall of the second transition passage 1105, so that the fourth flow passage is in communication with the second hole passage 1120. The pipe body 1500 is arranged outside the heat exchange core body, and has a gap with a side wall of the heat exchange core body, which is beneficial to reducing the heat exchange between the refrigerant in the pipe body 1500 and the refrigerant in the heat exchange core body. Alternatively, the pipe body 1500 may be fixed to an outer wall of the heat exchange core body, so as to enhance the overall mechanical performance of the heat management apparatus. The wall of the first end portion 1520 and the wall of the first transition passage 1313 can be sealed by a sealing ring, the wall of the second end portion 1530 and the second transition passage 1105 can be sealed by a sealing ring, and the pipe body 1500 can be mounted by insertion, which has a simple mounting method. Alternatively, the pipe body 1500 can be mounted and sealed by welding.

In a specific embodiment, referring to FIG. 18, the first plate body 1140 includes a plate body portion 1144 and a protrusion portion 1141, the plate body portion 1144 is substantially parallel to the plates, the second transition passage 1105 has an opening, facing the second hole passage 1120, on an upper wall of the plate body portion, the protrusion portion 1141 protrudes from the heat exchange core body relative to the plate body portion 1144, and the protrusion portion 1141 and the plate body portion 1144 can have an integral structure or be integrated by welding. The second transition passage 1105 has a first connecting port 1142 and a second connecting port 1143 on the protrusion portion 1141, the first connecting port 1142 is located on a side wall of the protrusion portion 1141, the second connecting port 1143 faces the second hole passage 1120, and the second end portion 1530 is fixed to a wall of the first connecting port 1142 by welding. The second hole passage 1120 is in communication with the chamber of the pipe body 1500 through the second transition passage 1105, so as to be in communication with the valve chamber 1330 of the throttle unit 1300. The second connecting port 1143 may be connected to other external device, in this case the second connecting port 1143 is the third outlet 1005, so that the second hole passage 1120 can be in communication with other component. The second transition passage 1105 can only include the first connecting port 1142 on the protrusion portion 1141, the first connecting port 1142 can face the second hole passage 1120, and the first connecting port 1142 is located on the side wall of the protrusion portion 1141. In addition, the first plate body 1140 does not include the protrusion portion, which is not described in detail.

With reference to FIG. 19, the heat management apparatus 1000 includes the connecting plate body 1400, and the connecting plate body 1400 is located between the first heat exchange portion 1100 and the second heat exchange portion 1200 along the axial direction of the first hole passage 1240. The connecting plate body 1400 includes a first through hole 1410, the chamber of the first through hole 1410 includes the second transition passage 1105, the connecting plate body 1400 includes a first connecting wall, the first connecting wall is in contact with the first wall 1110 and is fixed to the first wall 1110, the second transition passage 1105 has an opening, in communication with the second hole passage 1120, on the first connecting wall of the connecting plate body 1400, the second transition passage 1105 has a first connecting port 1142 on a second connecting wall of the connecting plate body 1400, the first connecting wall is intersected with the second connecting wall, and the second connecting wall is substantially perpendicular to the plates of the heat exchange core body. The third outlet 1005 of the heat management apparatus 1000 is formed in the first plate body 1140 or the protrusion portion 1141 which is fixedly connected to the first plate body, and the third outlet 1005 is in communication with the second hole passage 1120. The connecting body further includes a main body portion 1510, the main body portion 1510 is substantially parallel to the side wall of the heat exchange core body, the main body portion 1510 is located between the first end portion 1520 and the second end portion 1530, the connecting body further includes at least one first bending portion 1540 between the first end portion 1520 and the second end portion 1530, and the connecting body further includes at least one second bending portion 1550 between the main body portion 1510 and the second end portion 1530, so that the working medium flows more smoothly.

## Claims

1. A heat management apparatus (1000), comprising a throttle unit (1300) and a heat exchange core body, wherein the throttle unit (1300) is fixedly connected with the heat exchange core body or connected with the heat exchange core body in a limited manner, and the heat exchange core body comprises a plurality of plates which is stacked; the heat exchange core body comprises a first heat exchange portion (1100) and a second heat exchange portion (1200), the heat management apparatus (1000) comprises a refrigerant flow passage and a coolant flow passage, the coolant flow passage is located in the second heat exchange portion (1200), the refrigerant flow passage comprises a first flow passage, a second flow passage and a third flow passage, the first flow passage and the second flow passage are located in the first heat exchange portion (1100), the third flow passage is located in the second heat exchange portion (1200), a refrigerant in the first flow passage is configured to exchange heat with a refrigerant in the second flow passage in the first heat exchange portion (1100), a refrigerant in the third flow passage is configured to exchange heat with a coolant in the coolant flow passage in the second heat exchange portion (1200); the first heat exchange portion (1100) comprises a first wall (1110), the second heat exchange portion (1200) comprises a second wall (1220), and the first wall (1110) is arranged opposite to the second wall (1220); and
the throttle unit (1300) comprises a valve port portion (1350), the valve port portion (1350) comprises a valve port (1351), the first flow passage is in communication with the third flow passage through the valve port (1351), and the third flow passage is in communication with the second flow passage.

2. The heat management apparatus (1000) according to claim 1, wherein a first opening (1131) is formed on the first wall (1110), the first opening (1131) is in communication with the second flow passage, a second opening (1231) is formed on the second wall (1220), the second opening (1231) is in communication with the third flow passage, the first opening (1131) and the second opening (1231) are arranged opposite to each other or staggered, and the first opening (1131) is in communication with the second opening (1231);
the first heat exchange portion (1100) comprises a first plate body (1140), and the second heat exchange portion (1200) comprises a second plate body (1210), and the plurality of plates are located between the first plate body (1140) and the second plate body (1210) along a stacking direction of the plurality of plates; the third flow passage comprises a first hole passage (1240), the throttle unit (1300) comprises a first valve body (1310), the first valve body (1310) has a third opening (1312) on a bottom wall of the first valve body (1310), the first valve body (1310) is fixed to the second plate body (1210), the second plate body (1210) has a fourth opening (1211), at least part of the fourth opening (1211) is arranged opposite to the first hole passage (1240), and at least part of the fourth opening (1211) is arranged opposite to the third opening (1312); and
the refrigerant flow passage further comprises a fourth flow passage, one end of the fourth flow passage is in communication with the first flow passage, and the other end of the fourth flow passage is in communication with the valve port (1351).

3. The heat management apparatus (1000) according to claim 2, wherein the heat management apparatus (1000) comprises a connecting plate body (1400), the connecting plate body (1400) comprises a first through hole (1410) and a second through hole (1420), the first opening (1131) is arranged opposite to at least part of the second through hole (1420), the second opening (1231) is arranged opposite to at least part of the second through hole (1420), and the first opening (1131) is in communication with the second opening (1231) through the second through hole (1420); and
a wall forming the fourth flow passage is sealed to a wall of the first through hole (1410), the fourth flow passage is in communication with a chamber of the first through hole (1410), the first wall (1110) has a first communication port (1121), at least part of the first communication port (1121) is arranged opposite to the first through hole (1410), at least part of the first communication port (1121) is arranged opposite to a second hole passage (1120), and the first through hole (1410) is in communication with the second hole passage (1120) through the first communication port (1121).

4. The heat management apparatus (1000) according to claim 2 or 3, wherein the second heat exchange portion (1200) comprises a plurality of first plates which is stacked; and
each first plate comprises a first orifice (1204), the heat management apparatus (1000) comprises a pipe body (1500), the fourth flow passage comprises a chamber of the pipe body (1500), a plurality of the first orifices form the first hole passage (1240), at least part of the pipe body (1500) is located in the first hole passage (1240), at least part of the pipe body (1500) is located between the valve port (1351) and the first wall (1110) along an axial direction of the first hole passage (1240), and a first end portion of the pipe body (1500) is relatively fixed to the valve port portion (1350), the chamber of the pipe body (1500) is in communication with the valve port (1351), and a second end portion of the pipe body (1500) is matched with the first through hole (1410); the second heat exchange portion (1200) comprises a first separation plate (1280), the first separation plate (1280) and one plate of the second heat exchange portion (1200) have an integral structure, the first separation plate (1280) forms a bottom wall of the first hole passage (1240) along the axial direction of the first hole passage (1240), the first separation plate (1280) has an opening for accommodating the pipe body (1500), and a wall forming the opening of the first separation plate (1280) is sealed to a wall of the pipe body (1500); or, each first plate comprises at least one first orifice and a second orifice (1205), the second orifice (1205) is not in communication with the first orifice, a plurality of the second orifice (1205)s form the fourth flow passage, and a plurality of the first orifices form the first hole passage (1240); the valve port portion (1350) is sealed to a wall of the second orifice (1205), and the wall of the second orifice (1205) matched with the valve port portion (1350) is close to the second plate body (1210).

5. The heat management apparatus (1000) according to claim 4, wherein the heat management apparatus (1000) comprises the pipe body (1500), at least part of the valve port portion (1350) is located in the first end portion of the pipe body (1500) and is sealedly fixed to an inner wall of the first end portion; or, the valve port portion (1350) comprises a communication chamber, the valve port (1351) is in communication with the communication chamber, the first end portion is accommodated in the communication chamber and is sealed to a wall forming the communication chamber;
or, the heat management apparatus (1000) further comprises a connecting portion (1340), the connecting portion (1340) comprises an accommodating portion (1341), at least part of the valve port portion (1350) is located in an accommodating chamber formed by the accommodating portion (1341), and a side wall of the valve port portion (1350) is sealed to an inner wall of the accommodating portion (1341); at least part of the accommodating portion (1341) is located in the first end portion and is sealedly fixed to a wall of the first end portion; or the first end portion is located in the accommodating chamber formed by the accommodating portion (1341) and is sealed to a wall of the accommodating portion (1341).

6. The heat management apparatus (1000) according to claim 5, wherein the connecting portion (1340) further comprises a fixing portion (1343) and a communication portion (1342), the fixing portion (1343) is fixed to the first valve body (1310) and/or the second plate body (1210), the communication portion (1342) is located between the accommodating portion (1341) and the fixing portion (1343) along a radial direction of the first hole passage (1240), the throttle unit (1300) comprises a valve chamber (1330), a wall forming the valve chamber (1330) comprises a wall of the first valve body (1310) and a wall of the connecting portion (1340), the valve chamber (1330) is located on one side of the communication portion (1342), the first hole passage (1240) is located on another opposite side of the communication portion (1342), and the valve chamber (1330) is in communication with the first hole passage (1240) through the communication portion (1342).

7. The heat management apparatus (1000) according to claim 6, wherein the heat management apparatus (1000) comprises a support ring (1360), the first valve body (1310) comprises a first penetrating hole (1311), the valve port portion (1350) is located in a chamber formed by the first penetrating hole (1311), a wall of the first penetrating hole (1311) comprises a step surface abutting against the fixing portion (1343), one end of the support ring (1360) supports the fixing portion (1343) on the step surface, and the support ring (1360) is threadedly connected with the first penetrating hole (1311).

8. The heat management apparatus (1000) according to claim 4, wherein each first plate comprises four first orifices which are defined on a circumferential side of the second orifice (1205), the first plate comprises a first flange (1290), the first flange (1290) is folded from a main body of the first plate to the first valve body (1310), the first flange (1290) is inserted into an adjacent first flange and is sealedly fixed to the adjacent first flange, and a first flange adjacent to the connecting portion (1340) is sealedly connected to a wall of the valve port portion (1350).

9. The heat management apparatus (1000) according to claim 2 or 3, wherein the heat management apparatus (1000) comprises a first transition passage (1313) and a second transition passage (1105), the first transition passage (1313) is formed in the first valve body (1310), the second transition passage (1105) is located at one end of the second hole passage (1120) and is in communication with the second hole passage (1120), a wall of the first transition passage (1313) is matched with the first end portion of the pipe body (1500), and a wall of the second transition passage (1105) is matched with the second end portion of the pipe body (1500), and at least part of the pipe body (1500) is arranged outside the heat exchange core body.

10. The heat management apparatus (1000) according to claim 9, wherein the pipe body (1500) comprises a main body portion (1510), the first end portion of the pipe body (1500) is sealed to the wall of the first transition passage (1313), the second end portion of the pipe body (1500) is sealed to the wall of the second transition passage (1105); at least one bending portion is provided between the first end portion of the pipe body (1500) and the main body portion (1510), and at least one bending portion is provided between the second end portion of the pipe body (1500) and the main body portion (1510), the main body portion (1510) is substantially parallel to a side wall of the heat exchange core body, and a gap is formed between the main body portion (1510) and the side wall of the heat exchange core body.

11. The heat management apparatus (1000) according to claim 10, wherein the heat management apparatus (1000) comprises a connecting plate body (1400), the connecting plate body (1400) is located between the first heat exchange portion (1100) and the second heat exchange portion (1200) along the axial direction of the first hole passage (1240), the connecting plate body (1400) comprises a first through hole (1410), a chamber of the first through hole (1410) comprises the second transition passage (1105), the second transition passage (1105) has an opening, in communication with the second hole passage (1120), on a first connecting wall of the connecting plate body (1400), the first connecting wall is fixed to the first heat exchange portion (1100), and the second transition passage (1105) has an opening on a second connecting wall of the connecting plate body (1400);
or, the second transition passage (1105) is formed in the first plate body (1140), the second transition passage (1105) has an opening, facing the second hole passage (1120), on an upper wall of the first plate body (1140), the second transition passage (1105) has at least a first connecting port (1142) in the first plate body (1140), and a wall of the first connecting port (1142) is sealed to the second end portion of the pipe body (1500).

12. The heat management apparatus (1000) according to any one of claims 1 to 11, wherein the heat management apparatus (1000) comprises a first inlet (1001), a second inlet (1003), a first outlet (1002) and a second outlet (1004); the third flow passage comprises a first hole passage (1240), a sixth hole passage (1230) and a first inter-plate passage of the second heat exchange portion (1200), the first hole passage (1240) is in communication with the sixth hole passage (1230) through the first inter-plate passage of the second heat exchange portion (1200); the second flow passage comprises a third hole passage (1130), a fourth hole passage (1150) and a first inter-plate passage of the first heat exchange portion (1100), the third hole passage (1130) is in communication with the fourth hole passage (1150) through the first inter-plate passage of the first heat exchange portion (1100), and first outlet (1002) is in communication with the fourth hole passage (1150); the first flow passage comprises a fifth hole passage (1160), a second hole passage (1120) and a second inter-plate passage of the first heat exchange portion (1100), the fifth hole passage (1160) is in communication with the second hole passage (1120) through the second inter-plate passage of the first heat exchange portion (1100), and the first inlet (1001) is in communication with the fifth hole passage (1160); the coolant flow passage comprises a seventh hole passage (1260), an eighth hole passage (1270) and a second inter-plate passage of the second heat exchange portion (1200), the seventh hole passage (1260) is in communication with the eighth hole passage (1270) through the second inter-plate passage of the second heat exchange portion (1200), the second inlet (1003) is in communication with the seventh hole passage (1260), and the second outlet (1004) is in communication with the eighth hole passage (1270); and
along a stacking direction of the plurality of plates, the first outlet (1002) and the first inlet (1001) are located on one side of the heat management apparatus (1000), and the second outlet (1004) and the second inlet (1003) are located on another opposite side of the heat management apparatus (1000).

13. The heat management apparatus (1000) according to claim 12, wherein the heat management apparatus (1000) further comprises a third outlet (1005) and a third inlet (1006), the third outlet (1005) is in communication with the second hole passage (1120), the third inlet (1006) is in communication with the fourth hole passage (1150); and the first outlet (1002), the first inlet (1001), the third outlet (1005) and the third inlet (1006) are located on a same side of the heat management apparatus (1000).

14. A heat management system, comprising a heat management apparatus, a compressor (100) and a condenser (200), wherein the heat management apparatus is the heat management apparatus (1000) according to any one of claims 1 to 13, the heat management apparatus comprises a first inlet (1001), a first outlet (1002), a second outlet (1004) and a second inlet (1003), an outlet of the compressor (100) is in communication with the first inlet (1001) through the condenser (200), the first outlet (1002) is in communication with an inlet of the compressor (100), the heat management system further comprises a first heat exchanger (400) and a pump (300), the second outlet (1004) of the heat management apparatus is in communication with the second inlet (1003) through the first heat exchanger (400) and the pump (300).

15. The heat management system according to claim 14, wherein the heat management apparatus further comprises a third inlet (1006) and a third outlet (1005), the heat management system comprises an evaporator and a throttle element (500), the third outlet (1005) is in communication with the third inlet (1006) through the throttle element (500) and the evaporator.

## Patentansprüche

1. Wärmemanagementvorrichtung (1000), mit einer Drosseleinheit (1300) und einem Wärmetauscherkern, wobei die Drosseleinheit (1300) fest mit dem Wärmetauscherkern verbunden ist oder auf begrenzte Weise mit dem Wärmetauscherkern verbunden ist, und wobei der Wärmetauscherkern eine Vielzahl von gestapelten Platten umfasst; der Wärmetauscherkern umfasst einen ersten Wärmetauscherabschnitt (1100) und einen zweiten Wärmetauscherabschnitt (1200), die Wärmemanagementvorrichtung (1000) umfasst einen Kältemittelströmungskanal und einen Kühlmittelströmungskanal, der Kühlmittelströmungskanal befindet sich in dem zweiten Wärmetauscherabschnitt (1200), der Kältemittelströmungskanal umfasst einen ersten Strömungskanal, einen zweiten Strömungskanal und einen dritten Strömungskanal, der erste Strömungskanal und der zweite Strömungskanal befinden sich in dem ersten Wärmetauscherabschnitt (1100), der dritte Strömungskanal befindet sich in dem zweiten Wärmetauscherabschnitt (1200), ein Kältemittel in dem ersten Strömungskanal ist dazu ausgebildet, Wärme mit einem Kältemittel in dem zweiten Strömungskanal in dem ersten Wärmetauscherabschnitt (1100) auszutauschen, ein Kältemittel in dem dritten Strömungskanal ist dazu ausgebildet, Wärme mit einem Kühlmittel in dem Kühlmittelströmungskanal in dem zweiten Wärmetauscherabschnitt (1200) auszutauschen; der erste Wärmetauscherabschnitt (1100) umfasst eine erste Wand (1110), der zweite Wärmetauscherabschnitt (1200) umfasst eine zweite Wand (1220), und die erste Wand (1110) ist gegenüber der zweiten Wand (1220) angeordnet; und
die Drosseleinheit (1300) umfasst einen Ventilöffnungsabschnitt (1350), der Ventilöffnungsabschnitt (1350) umfasst eine Ventilöffnung (1351), der erste Strömungskanal steht mit dem dritten Strömungskanal durch die Ventilöffnung (1351) in Verbindung, und der dritte Strömungskanal steht mit dem zweiten Strömungskanal in Verbindung.

2. Wärmemanagementvorrichtung (1000) nach Anspruch 1, wobei eine erste Öffnung (1131) an der ersten Wand (1110) ausgebildet ist, die erste Öffnung (1131) mit dem zweiten Strömungskanal in Verbindung steht, eine zweite Öffnung (1231) an der zweiten Wand (1220) ausgebildet ist, die zweite Öffnung (1231) mit dem dritten Strömungskanal in Verbindung steht, die erste Öffnung (1131) und die zweite Öffnung (1231) einander gegenüberliegend oder versetzt angeordnet sind, und die erste Öffnung (1131) mit der zweiten Öffnung (1231) in Verbindung steht;
der erste Wärmetauscherabschnitt (1100) umfasst einen ersten Plattenkörper (1140), und der zweite Wärmetauscherabschnitt (1200) umfasst einen zweiten Plattenkörper (1210), und die Vielzahl von Platten befinden sich zwischen dem ersten Plattenkörper (1140) und dem zweiten Plattenkörper (1210) entlang einer Stapelrichtung der Vielzahl von Platten; der dritte Strömungskanal umfasst einen ersten Lochdurchgang (1240), die Drosseleinheit (1300) umfasst einen ersten Ventilkörper (1310), der erste Ventilkörper (1310) besitzt eine dritte Öffnung (1312) an einer Bodenwand des ersten Ventilkörpers (1310), der erste Ventilkörper (1310) ist an dem zweiten Plattenkörper (1210) befestigt, der zweite Plattenkörper (1210) besitzt eine vierte Öffnung (1211), wenigstens ein Teil der vierten Öffnung (1211) ist gegenüber dem ersten Lochdurchgang (1240) angeordnet, und wenigstens ein Teil der vierten Öffnung (1211) ist gegenüber der dritten Öffnung (1312) angeordnet; und
der Kältemittelströmungskanal umfasst ferner einen vierten Strömungskanal, ein Ende des vierten Strömungskanals steht mit dem ersten Strömungskanal in Verbindung, und das andere Ende des vierten Strömungskanals steht mit der Ventilöffnung (1351) in Verbindung.

3. Wärmemanagementvorrichtung (1000) nach Anspruch 2, wobei die Wärmemanagementvorrichtung (1000) einen Verbindungsplattenkörper (1400) umfasst, der Verbindungsplattenkörper (1400) eine erste Durchgangsbohrung (1410) und eine zweite Durchgangsbohrung (1420) umfasst, die erste Öffnung (1131) gegenüber wenigstens einem Teil der zweiten Durchgangsbohrung (1420) angeordnet ist, die zweite Öffnung (1231) gegenüber wenigstens einem Teil der zweiten Durchgangsbohrung (1420) angeordnet ist, und die erste Öffnung (1131) mit der zweiten Öffnung (1231) durch die zweite Durchgangsbohrung (1420) in Verbindung steht; und
eine den vierten Strömungskanal bildende Wand ist gegenüber einer Wand der ersten Durchgangsbohrung (1410) abgedichtet, der vierte Strömungskanal steht mit einer Kammer der ersten Durchgangsbohrung (1410) in Verbindung, die erste Wand (1110) besitzt eine erste Verbindungsöffnung (1121), wenigstens ein Teil der ersten Verbindungsöffnung (1121) ist gegenüber der ersten Durchgangsbohrung (1410) angeordnet, wenigstens ein Teil der ersten Verbindungsöffnung (1121) ist gegenüber einem zweiten Lochdurchgang (1120) angeordnet, und die erste Durchgangsbohrung (1410) steht mit dem zweiten Lochdurchgang (1120) durch die erste Verbindungsöffnung (1121) in Verbindung.

4. Wärmemanagementvorrichtung (1000) nach Anspruch 2 oder 3, wobei der zweite Wärmetauscherabschnitt (1200) eine Vielzahl von gestapelten ersten Platten umfasst; und
jede erste Platte umfasst eine erste Öffnung (1204), die Wärmemanagementvorrichtung (1000) umfasst einen Rohrkörper (1500), der vierte Strömungskanal umfasst eine Kammer des Rohrkörpers (1500), eine Vielzahl der ersten Öffnungen bildet den ersten Lochdurchgang (1240), wenigstens ein Teil des Rohrkörpers (1500) befindet sich in dem ersten Lochdurchgang (1240), wenigstens ein Teil des Rohrkörpers (1500) befindet sich zwischen der Ventilöffnung (1351) und der ersten Wand (1110) entlang einer axialen Richtung des ersten Lochdurchgangs (1240), und ein erster Endabschnitt des Rohrkörpers (1500) ist in Bezug dazu an dem Ventilöffnungsabschnitt (1350) befestigt, die Kammer des Rohrkörpers (1500) steht mit der Ventilöffnung (1351) in Verbindung, und ein zweiter Endabschnitt des Rohrkörpers (1500) ist auf die erste Durchgangsbohrung (1410) ausgerichtet; der zweite Wärmetauscherabschnitt (1200) umfasst eine erste Trennplatte (1280), die erste Trennplatte (1280) und eine Platte des zweiten Wärmetauscherabschnitts (1200) sind einstückig ausgebildet, die erste Trennplatte (1280) bildet eine Bodenwand des ersten Lochdurchgangs (1240) entlang der axialen Richtung des ersten Lochdurchgangs (1240), die erste Trennplatte (1280) besitzt eine Öffnung zur Aufnahme des Rohrkörpers (1500), und eine die Öffnung der ersten Trennplatte (1280) bildende Wand ist gegenüber einer Wand des Rohrkörpers (1500) abgedichtet; oder, jede erste Platte umfasst wenigstens eine erste Öffnung und eine zweite Öffnung (1205), die zweite Öffnung (1205) steht nicht mit der ersten Öffnung in Verbindung, eine Vielzahl der zweiten Öffnungen (1205) bildet den vierten Strömungskanal, und eine Vielzahl der ersten Öffnungen bildet den ersten Lochdurchgang (1240); der Ventilöffnungsabschnitt (1350) ist gegenüber einer Wand der zweiten Öffnung (1205) abgedichtet, und die Wand der zweiten Öffnung (1205), die auf den Ventilöffnungsabschnitt (1350) ausgerichtet ist, befindet sich nahe bei dem zweiten Plattenkörper (1210).

5. Wärmemanagementvorrichtung (1000) nach Anspruch 4, wobei die Wärmemanagementvorrichtung (1000) den Rohrkörper (1500) umfasst, wenigstens ein Teil des Ventilöffnungsabschnitts (1350) sich in dem ersten Endabschnitt des Rohrkörpers (1500) befindet und dicht schließend an einer Innenwand des ersten Endabschnitts befestigt ist; oder, der Ventilöffnungsabschnitt (1350) umfasst eine Verbindungskammer, die Ventilöffnung (1351) steht mit der Verbindungskammer in Verbindung, der erste Endabschnitt ist in der Verbindungskammer aufgenommen und gegenüber einer die Verbindungskammer bildenden Wand abgedichtet;
oder, die Wärmemanagementvorrichtung (1000) umfasst ferner einen Verbindungsabschnitt (1340), der Verbindungsabschnitt (1340) umfasst einen Aufnahmeabschnitt (1341), wenigstens ein Teil des Ventilöffnungsabschnitts (1350) befindet sich in einer durch den Aufnahmeabschnitt (1341) gebildeten Aufnahmekammer, und eine Seitenwand des Ventilöffnungsabschnitts (1350) ist gegenüber einer Innenwand des Aufnahmeabschnitts (1341) abgedichtet; wenigstens ein Teil des Aufnahmeabschnitts (1341) befindet sich in dem ersten Endabschnitt und ist dicht schließend an einer Wand des ersten Endabschnitts befestigt; oder der erste Endabschnitt befindet sich in der durch den Aufnahmeabschnitt (1341) gebildeten Aufnahmekammer und ist gegenüber einer Wand des Aufnahmeabschnitts (1341) abgedichtet.

6. Wärmemanagementvorrichtung (1000) nach Anspruch 5, wobei der Verbindungsabschnitt (1340) ferner einen Befestigungsabschnitt (1343) und einen Kommunikationsabschnitt (1342) umfasst, der Befestigungsabschnitt (1343) an dem Ventilkörper (1310) und/oder dem zweiten Plattenkörper (1210) befestigt ist, der Kommunikationsabschnitt (1342) sich zwischen dem Aufnahmeabschnitt (1341) und dem Befestigungsabschnitt (1343) entlang einer radialen Richtung des ersten Lochdurchgangs (1240) befindet, die Drosseleinheit (1300) eine Ventilkammer (1330) umfasst, eine die Ventilkammer (1330) bildende Wand eine Wand des ersten Ventilkörpers (1310) und eine Wand des Verbindungsabschnitts (1340) umfasst, die Ventilkammer (1330) sich auf einer Seite des Kommunikationsabschnitts (1342) befindet, der erste Lochdurchgang (1240) sich auf der anderen, gegenüberliegenden Seite des Kommunikationsabschnitts (1342) befindet, und die Ventilkammer (1330) durch den Kommunikationsabschnitt (1342) mit dem ersten Lochdurchgang (1240) in Verbindung steht.

7. Wärmemanagementvorrichtung (1000) nach Anspruch 6, wobei die Wärmemanagementvorrichtung (1000) einen Stützring (1360) umfasst, der erste Ventilkörper (1310) ein erstes Durchgangsloch (1311) umfasst, der Ventilöffnungsabschnitt (1350) sich in einer durch das erste Durchgangsloch (1311) gebildeten Kammer befindet, eine Wand des ersten Durchgangslochs (1311) eine gegen den Befestigungsabschnitt (1343) stoßende Stufenfläche umfasst, ein Ende des Stützrings (1360) den Befestigungsabschnitt (1343) auf der Stufenfläche stützt, und der Stützring (1360) mit dem ersten Durchgangsloch (1311) verschraubt ist.

8. Wärmemanagementvorrichtung (1000) nach Anspruch 4, wobei jede erste Platte vier erste Öffnungen umfasst, die auf einer Umfangsseite der zweiten Öffnung (1205) ausgebildet sind, die erste Platte einen ersten Flansch (1290) umfasst, der erste Flansch (1290) von einem Hauptkörper der ersten Platte zu dem ersten Ventilkörper (1310) umgeklappt ist, der erste Flansch (1290) in einen angrenzenden ersten Flansch eingesetzt ist und dicht schließend an dem angrenzenden ersten Flansch befestigt ist, und ein an den Verbindungsabschnitt (1340) angrenzender erster Flansch dicht schließend mit einer Wand des Ventilöffnungsabschnitts (1350) verbunden ist.

9. Wärmemanagementvorrichtung (1000) nach Anspruch 2 oder 3, wobei die Wärmemanagementvorrichtung (1000) einen ersten Übergangskanal (1313) und einen zweiten Übergangskanal (1105) umfasst, der erste Übergangskanal (1313) in dem ersten Ventilkörper (1310) ausgebildet ist, der zweite Übergangskanal (1105) sich an einem Ende des zweiten Lochdurchgangs (1120) befindet und mit dem zweiten Lochdurchgang (1120) in Verbindung steht, eine Wand des ersten Übergangskanals (1313) auf den ersten Endabschnitt des Rohrkörpers (1500) ausgerichtet ist, und eine Wand des zweiten Übergangskanals (1105) auf den zweiten Endabschnitt des Rohrkörpers (1500) ausgerichtet ist, und wenigstens ein Teil des Rohrkörpers (1500) außerhalb des Wärmetauscherkerns angeordnet ist.

10. Wärmemanagementvorrichtung (1000) nach Anspruch 9, wobei der Rohrkörper (1500) einen Hauptkörperabschnitt (1510) umfasst, der erste Endabschnitt des Rohrkörpers (1500) gegenüber der Wand des ersten Übergangskanals (1313) abgedichtet ist, der zweite Endabschnitt des Rohrkörpers (1500) gegenüber der Wand des zweiten Übergangskanals (1105) abgedichtet ist; wenigstens ein Biegungsabschnitt zwischen dem ersten Endabschnitt des Rohrkörpers (1500) und dem Hauptkörperabschnitt (1510) vorgesehen ist, und wenigstens ein Biegungsabschnitt zwischen dem zweiten Endabschnitt des Rohrkörpers (1500) und dem Hauptkörperabschnitt (1510) vorgesehen ist, der Hauptkörperabschnitt (1510) im Wesentlichen parallel zu einer Seitenwand des Wärmetauscherkerns verläuft, und ein Spalt zwischen dem Hauptkörperabschnitt (1510) und der Seitenwand des Wärmetauscherkerns ausgebildet ist.

11. Wärmemanagementvorrichtung (1000) nach Anspruch 10, wobei die Wärmemanagementvorrichtung (1000) einen Verbindungsplattenkörper (1400) umfasst, der Verbindungsplattenkörper (1400) sich zwischen dem ersten Wärmetauscherabschnitt (1100) und dem zweiten Wärmetauscherabschnitt (1200) entlang der axialen Richtung des ersten Lochdurchgangs (1240) befindet, der Verbindungsplattenkörper (1400) eine erste Durchgangsbohrung (1410) umfasst, eine Kammer der ersten Durchgangsbohrung (1410) den zweiten Übergangskanal (1105) umfasst, der zweite Übergangskanal (1105) eine Öffnung besitzt, die mit dem zweiten Lochdurchgang (1120) an einer ersten Verbindungswand des Verbindungsplattenkörpers (1400) in Verbindung steht, die erste Verbindungswand an dem ersten Wärmetauscherabschnitt (1100) befestigt ist, und der zweite Übergangskanal (1105) eine Öffnung an einer zweiten Verbindungswand des Verbindungsplattenkörpers (1400) besitzt;
oder, der zweite Übergangskanal (1105) ist in dem ersten Plattenkörper (1140) ausgebildet, der zweite Übergangskanal (1105) besitzt eine Öffnung, die dem zweiten Lochdurchgang (1120) an einer oberen Wand des ersten Plattenkörpers (1140) zugewandt ist, der zweite Übergangskanal (1105) besitzt mindestens eine erste Verbindungsöffnung (1142) in dem ersten Plattenkörper (1140), und eine Wand der ersten Verbindungsöffnung (1142) ist gegenüber dem zweiten Endabschnitt des Rohrkörpers (1500) abgedichtet.

12. Wärmemanagementvorrichtung (1000) nach einem der Ansprüche 1 bis 11, wobei die Wärmemanagementvorrichtung (1000) einen ersten Einlass (1001), einen zweiten Einlass (1003), einen ersten Auslass (1002) und einen zweiten Auslass (1004) umfasst; der dritte Strömungskanal umfasst einen ersten Lochdurchgang (1240), einen sechsten Lochdurchgang (1230) und einen ersten Zwischenplattenkanal des zweiten Wärmetauscherabschnitts (1200), der erste Lochdurchgang (1240) steht durch den ersten Zwischenplattenkanal des zweiten Wärmetauscherabschnitts (1200) mit dem sechsten Lochdurchgang (1230) in Verbindung; der zweite Strömungskanal umfasst einen dritten Lochdurchgang (1130), einen vierten Lochdurchgang (1150) und einen ersten Zwischenplattenkanal des ersten Wärmetauscherabschnitts (1100); der dritte Lochdurchgang (1130) steht durch den ersten Zwischenplattenkanal des ersten Wärmetauscherabschnitts (1100) mit dem vierten Lochdurchgang (1150) in Verbindung; und der erste Auslass (1002) steht mit dem vierten Lochdurchgang (1150) in Verbindung; der erste Strömungskanal umfasst einen fünften Lochdurchgang (1160), einen zweiten Lochdurchgang (1120) und einen zweiten Zwischenplattenkanal des ersten Wärmetauscherabschnitts (1100), der fünfte Lochdurchgang (1160) steht durch den zweiten Zwischenplattenkanal des ersten Wärmetauscherabschnitts (1100) mit dem zweiten Lochdurchgang (1120) in Verbindung, und der erste Einlass (1001) steht mit dem fünften Lochdurchgang (1160) in Verbindung; der Kühlmittelströmungskanal umfasst einen siebten Lochdurchgang (1260), einen achten Lochdurchgang (1270) und einen zweiten Zwischenplattenkanal des zweiten Wärmetauscherabschnitts (1200), der siebte Lochdurchgang (1260) steht durch den zweiten Zwischenplattenkanal des zweiten Wärmetauscherabschnitts (1200) mit dem achten Lochdurchgang (1270) in Verbindung, der zweite Einlass (1003) steht mit dem siebten Lochdurchgang (1260) in Verbindung, und der zweite Auslass (1004) steht mit dem achten Lochdurchgang (1270) in Verbindung; und
entlang einer Stapelrichtung der Vielzahl von Platten befinden sich der erste Auslass (1002) und der erste Einlass (1001) auf einer Seite der Wärmemanagementvorrichtung (1000), und der zweite Auslass (1004) und der zweite Einlass (1003) befinden sich auf einer anderen, gegenüberliegenden Seite der Wärmemanagementvorrichtung (1000).

13. Wärmemanagementvorrichtung (1000) nach Anspruch 12, wobei die Wärmemanagementvorrichtung (1000) ferner einen dritten Auslass (1005) und einen dritten Einlass (1006) umfasst, der dritte Auslass (1005) mit dem zweiten Lochdurchgang (1120) in Verbindung steht und der dritte Einlass (1006) mit dem vierten Lochdurchgang (1150) in Verbindung steht; und der erste Auslass (1002), der erste Einlass (1001), der dritte Auslass (1005) und der dritte Einlass (1006) befinden sich auf derselben Seite der Wärmemanagementvorrichtung (1000).

14. Wärmemanagementsystem, umfassend eine Wärmemanagementvorrichtung, einen Kompressor (100) und einen Kondensator (200), wobei die Wärmemanagementvorrichtung die Wärmemanagementvorrichtung (1000) nach einem der Ansprüche 1 bis 13 ist, die Wärmemanagementvorrichtung einen ersten Einlass (1001), einen ersten Auslass (1002), einen zweiten Auslass (1004) und einen zweiten Einlass (1003) umfasst, ein Auslass des Kompressors (100) durch den Kondensator (200) mit dem ersten Einlass (1001) in Verbindung steht, der erste Auslass (1002) mit einem Einlass des Kompressors (100) in Verbindung steht, das Wärmemanagementsystem ferner einen ersten Wärmetauscher (400) und eine Pumpe (300) umfasst, der zweite Auslass (1004) der Wärmemanagementvorrichtung durch den ersten Wärmetauscher (400) und die Pumpe (300) mit dem zweiten Einlass (1003) in Verbindung steht.

15. Wärmemanagementsystem nach Anspruch 14, wobei die Wärmemanagementvorrichtung ferner einen dritten Einlass (1006) und einen dritten Auslass (1005) umfasst, das Wärmemanagementsystem einen Verdampfer und ein Drosselelement (500) umfasst, der dritte Auslass (1005) durch das Drosselelement (500) und den Verdampfer mit dem dritten Einlass (1006) in Verbindung steht.

## Revendications

1. Appareil de gestion de chaleur (1000), comprenant une unité d'étranglement (1300) et un corps de noyau d'échange de chaleur, dans lequel l'unité d'étranglement (1300) est reliée de manière fixe au corps de noyau d'échange de chaleur ou reliée au corps de noyau d'échange de chaleur de manière limitée, et le corps de noyau d'échange de chaleur comprend une pluralité de plaques empilées ; le corps de noyau d'échange de chaleur comprend une première partie d'échange de chaleur (1100) et une deuxième partie d'échange de chaleur (1200), l'appareil de gestion de chaleur (1000) comprend un passage d'écoulement de fluide frigorigène et un passage d'écoulement de fluide de refroidissement, le passage d'écoulement de fluide de refroidissement est situé dans la deuxième partie d'échange de chaleur (1200), le passage d'écoulement de fluide frigorigène comprend un premier passage d'écoulement, un deuxième passage d'écoulement et un troisième passage d'écoulement, le premier passage d'écoulement et le deuxième passage d'écoulement sont situés dans la première partie d'échange de chaleur (1100), le troisième passage d'écoulement est situé dans la deuxième partie d'échange de chaleur (1200), un fluide frigorigène présent dans le premier passage d'écoulement est configuré pour échanger de la chaleur avec un fluide frigorigène présent dans le deuxième passage d'écoulement dans la première partie d'échange de chaleur (1100), un fluide frigorigène présent dans le troisième passage d'écoulement est configuré pour échanger de la chaleur avec un fluide de refroidissement présent dans le passage d'écoulement de fluide de refroidissement dans la deuxième partie d'échange de chaleur (1200) ; la première partie d'échange de chaleur (1100) comprend une première paroi (1110), la deuxième partie d'échange de chaleur (1200) comprend une deuxième paroi (1220), et la première paroi (1110) est agencée en face de la deuxième paroi (1220) ; et
l'unité d'étranglement (1300) comprend une partie formant orifice de soupape (1350), ladite partie formant orifice de soupape (1350) comprend un orifice de soupape (1351), le premier passage d'écoulement est en communication avec le troisième passage d'écoulement par l'intermédiaire de l'orifice de soupape (1351), et le troisième passage d'écoulement est en communication avec le deuxième passage d'écoulement.

2. Appareil de gestion de chaleur (1000) selon la revendication 1, dans lequel une première ouverture (1131) est formée sur la première paroi (1110), la première ouverture (1131) est en communication avec le deuxième passage d'écoulement, une deuxième ouverture (1231) est formée sur la deuxième paroi (1220), la deuxième ouverture (1231) est en communication avec le troisième passage d'écoulement, la première ouverture (1131) et la deuxième ouverture (1231) sont agencées en vis-à-vis ou en quinconce, et la première ouverture (1131) est en communication avec la deuxième ouverture (1231) ;
la première partie d'échange de chaleur (1100) comprend un premier corps de plaque (1140), et la deuxième partie d'échange de chaleur (1200) comprend un deuxième corps de plaque (1210), et la pluralité de plaques est située entre le premier corps de plaque (1140) et le deuxième corps de plaque (1210) le long d'une direction d'empilement de la pluralité de plaques ; le troisième passage d'écoulement comprend un premier passage trou (1240), l'unité d'étranglement (1300) comprend un premier corps de soupape (1310), le premier corps de soupape (1310) présente une troisième ouverture (1312) sur une paroi inférieure du premier corps de soupape (1310), le premier corps de soupape (1310) est fixé au deuxième corps de plaque (1210), le deuxième corps de plaque (1210) présente une quatrième ouverture (1211), au moins une partie de la quatrième ouverture (1211) est agencée en face du premier passage trou (1240), et au moins une partie de la quatrième ouverture (1211) est agencée en face de la troisième ouverture (1312) ; et
le passage d'écoulement de fluide frigorigène comprend en outre un quatrième passage d'écoulement, une extrémité du quatrième passage d'écoulement est en communication avec le premier passage d'écoulement, et l'autre extrémité du quatrième passage d'écoulement est en communication avec l'orifice de soupape (1351).

3. Appareil de gestion de chaleur (1000) selon la revendication 2, dans lequel l'appareil de gestion de chaleur (1000) comprend un corps de plaque de raccordement (1400), le corps de plaque de raccordement (1400) comporte un premier trou traversant (1410) et un deuxième trou traversant (1420), la première ouverture (1131) est agencée en face d'au moins une partie du deuxième trou traversant (1420), la deuxième ouverture (1231) est agencée en face d'au moins une partie du deuxième trou traversant (1420), et la première ouverture (1131) est en communication avec la deuxième ouverture (1231) par l'intermédiaire du deuxième trou traversant (1420) ; et
une paroi formant le quatrième passage d'écoulement est scellée à une paroi du premier trou traversant (1410), le quatrième passage d'écoulement est en communication avec une chambre du premier trou traversant (1410), la première paroi (1110) comporte un premier orifice de communication (1121), au moins une partie du premier orifice de communication (1121) est agencée en face du premier trou traversant (1410), au moins une partie du premier orifice de communication (1121) est agencée en face d'un deuxième passage trou (1120), et le premier trou traversant (1410) est en communication avec le deuxième passage trou (1120) par l'intermédiaire du premier orifice de communication (1121).

4. Appareil de gestion de chaleur (1000) selon la revendication 2 ou 3, dans lequel la deuxième partie d'échange de chaleur (1200) comprend une pluralité de premières plaques empilées ; et
chaque première plaque comprend un premier orifice (1204), l'appareil de gestion de chaleur (1000) comprend un corps de tuyau (1500), le quatrième passage d'écoulement comprend une chambre du corps de tuyau (1500), une pluralité des premiers orifices forment le premier passage trou (1240), au moins une partie du corps de tuyau (1500) est située dans le premier passage trou (1240), au moins une partie du corps de tuyau (1500) est située entre l'orifice de soupape (1351) et la première paroi (1110) le long d'une direction axiale du premier passage trou (1240), et une première partie d'extrémité du corps de tuyau (1500) est fixée par rapport à la partie d'orifice de soupape (1350), la chambre du corps de tuyau (1500) est en communication avec l'orifice de soupape (1351), et une deuxième partie d'extrémité du corps de tuyau (1500) est alignée avec le premier trou traversant (1410) ; la deuxième partie d'échange de chaleur (1200) comprend une première plaque de séparation (1280), la première plaque de séparation (1280) et l'une des plaques de la deuxième partie d'échange de chaleur (1200) présentent une structure intégrale, la première plaque de séparation (1280) forme une paroi inférieure du premier passage trou (1240) le long de la direction axiale du premier passage trou (1240), la première plaque de séparation (1280) présente une ouverture destinée à recevoir le corps de tuyau (1500), et une paroi formant l'ouverture de la première plaque de séparation (1280) est scellée contre une paroi du corps de tuyau (1500) ; ou bien, chaque première plaque comprend au moins un premier orifice et un deuxième orifice (1205), le deuxième orifice (1205) n'est pas en communication avec le premier orifice, une pluralité de deuxièmes orifices (1205) forme le quatrième passage d'écoulement, et une pluralité de premiers orifices forme le premier passage trou (1240) ; la partie d'orifice de soupape (1350) est scellée contre une paroi du deuxième orifice (1205), et la paroi du deuxième orifice (1205) aligné avec la partie d'orifice de soupape (1350) est proche du deuxième corps de plaque (1210).

5. Appareil de gestion de chaleur (1000) selon la revendication 4, dans lequel l'appareil de gestion de chaleur (1000) comprend le corps de tuyau (1500), au moins une partie de la partie d'orifice de soupape (1350) est située dans la première partie d'extrémité du corps de tuyau (1500) et est fixée de manière étanche à une paroi intérieure de la première partie d'extrémité ; ou bien, la partie formant orifice de soupape (1350) comprend une chambre de communication, l'orifice de soupape (1351) est en communication avec la chambre de communication, la première partie d'extrémité est logée dans la chambre de communication et est scellée à une paroi formant la chambre de communication ;
ou bien, l'appareil de gestion de chaleur (1000) comprend en outre une partie de raccordement (1340), la partie de raccordement (1340) comprend une partie de logement (1341), au moins une partie de la partie formant orifice de soupape (1350) est située dans une chambre de logement formée par la partie de logement (1341), et une paroi latérale de la partie formant orifice de soupape (1350) est scellée à une paroi intérieure de la partie de logement (1341) ; au moins une partie de la partie de logement (1341) est située dans la première partie d'extrémité et est fixée de manière étanche à une paroi de la première partie d'extrémité ; ou la première partie d'extrémité est située dans la chambre de logement formée par la partie de logement (1341) et est scellée à une paroi de la partie de logement (1341).

6. Appareil de gestion de chaleur (1000) selon la revendication 5, dans lequel la partie de raccordement (1340) comprend en outre une partie de fixation (1343) et une partie de communication (1342), la partie de fixation (1343) est fixée au premier corps de soupape (1310) et/ou au deuxième corps de plaque (1210), la partie de communication (1342) est située entre la partie de logement (1341) et la partie de fixation (1343) le long d'une direction radiale du premier passage trou (1240), l'unité d'étranglement (1300) comprend une chambre de soupape (1330), une paroi formant la chambre de soupape (1330) comprend une paroi du premier corps de soupape (1310) et une paroi de la partie de raccordement (1340), la chambre de soupape (1330) est située d'un côté de la partie de communication (1342), le premier passage trou (1240) est situé de l'autre côté opposé de la partie de communication (1342), et la chambre de soupape (1330) est en communication avec le premier passage trou (1240) par l'intermédiaire de la partie de communication (1342).

7. Appareil de gestion de chaleur (1000) selon la revendication 6, dans lequel l'appareil de gestion de chaleur (1000) comprend une bague de support (1360), le premier corps de soupape (1310) comprend un premier trou de pénétration (1311), la partie d'orifice de soupape (1350) est située dans une chambre formée par le premier trou de pénétration (1311), une paroi du premier trou de pénétration (1311) comporte une surface en gradin venant en butée contre la partie de fixation (1343), une extrémité de la bague de support (1360) supporte la partie de fixation (1343) sur la surface en gradin, et la bague de support (1360) est reliée par vissage au premier trou de pénétration (1311).

8. Appareil de gestion de chaleur (1000) selon la revendication 4, dans lequel chaque première plaque comprend quatre premiers orifices qui sont définis sur un côté circonférentiel du deuxième orifice (1205), la première plaque comprend une première bride (1290), la première bride (1290) est repliée depuis un corps principal de la première plaque vers le premier corps de soupape (1310), la première bride (1290) est insérée dans une première bride adjacente et est fixée de manière étanche à la première bride adjacente, et une première bride adjacente à la partie de raccordement (1340) est reliée de manière étanche à une paroi de la partie formant orifice de soupape (1350).

9. Appareil de gestion de chaleur (1000) selon la revendication 2 ou 3, dans lequel l'appareil de gestion de chaleur (1000) comprend un premier passage de transition (1313) et un deuxième passage de transition (1105), le premier passage de transition (1313) est formé dans le premier corps de soupape (1310), le deuxième passage de transition (1105) est situé à une extrémité du deuxième passage trou (1120) et est en communication avec le deuxième passage trou (1120), une paroi du premier passage de transition (1313) est alignée avec la première partie d'extrémité du corps de tuyau (1500), et une paroi du deuxième passage de transition (1105) est alignée avec la deuxième partie d'extrémité du corps de tuyau (1500), et au moins une partie du corps de tuyau (1500) est agencée à l'extérieur du corps de noyau d'échange de chaleur.

10. Appareil de gestion de chaleur (1000) selon la revendication 9, dans lequel le corps de tuyau (1500) comprend une partie de corps principal (1510), la première partie d'extrémité du corps de tuyau (1500) est scellée à la paroi du premier passage de transition (1313), la deuxième partie d'extrémité du corps de tuyau (1500) est scellée à la paroi du deuxième passage de transition (1105) ; au moins une partie coudée est prévue entre la première partie d'extrémité du corps de tuyau (1500) et la partie de corps principal (1510), et au moins une partie coudée est prévue entre la deuxième partie d'extrémité du corps de tuyau (1500) et la partie de corps principal (1510), la partie de corps principal (1510) est sensiblement parallèle à une paroi latérale du corps de noyau d'échange de chaleur, et un interstice est formé entre la partie de corps principal (1510) et la paroi latérale du corps de noyau d'échange de chaleur.

11. Appareil de gestion de chaleur (1000) selon la revendication 10, dans lequel l'appareil de gestion de chaleur (1000) comprend un corps de plaque de raccordement (1400), le corps de plaque de raccordement (1400) est situé entre la première partie d'échange de chaleur (1100) et la deuxième partie d'échange de chaleur (1200) le long de la direction axiale du premier passage trou (1240), le corps de plaque de raccordement (1400) comprend un premier trou traversant (1410), une chambre du premier trou traversant (1410) comprend le deuxième passage de transition (1105), le deuxième passage de transition (1105) présente une ouverture, en communication avec le deuxième passage trou (1120), sur une première paroi de raccordement du corps de plaque de raccordement (1400), la première paroi de raccordement est fixée à la première partie d'échange de chaleur (1100), et le deuxième passage de transition (1105) présente une ouverture sur une deuxième paroi de raccordement du corps de plaque de raccordement (1400) ;
ou bien, le deuxième passage de transition (1105) est formé dans le premier corps de plaque (1140), le deuxième passage de transition (1105) présente une ouverture, faisant face au deuxième passage trou (1120), sur une paroi supérieure du premier corps de plaque (1140), le deuxième passage de transition (1105) présente au moins un premier orifice de raccordement (1142) dans le premier corps de plaque (1140), et une paroi du premier orifice de raccordement (1142) est scellée à la deuxième partie d'extrémité du corps de tuyau (1500).

12. Appareil de gestion de chaleur (1000) selon l'une quelconque des revendications 1 à 11, dans lequel l'appareil de gestion de chaleur (1000) comprend une première entrée (1001), une deuxième entrée (1003), une première sortie (1002) et une deuxième sortie (1004) ; le troisième passage d'écoulement comprend un premier passage trou (1240), un sixième passage trou (1230) et un premier passage inter-plaques de la deuxième partie d'échange de chaleur (1200), le premier passage trou (1240) est en communication avec le sixième passage trou (1230) par l'intermédiaire du premier passage inter-plaques de la deuxième partie d'échange de chaleur (1200) ; le deuxième passage d'écoulement comprend un troisième passage trou (1130), un quatrième passage trou (1150) et un premier passage inter-plaques de la première partie d'échange de chaleur (1100), le troisième passage trou (1130) est en communication avec le quatrième passage trou (1150) par l'intermédiaire du premier passage inter-plaques de la première partie d'échange de chaleur (1100), et la première sortie (1002) est en communication avec le quatrième passage trou (1150) ; le premier passage d'écoulement comprend un cinquième passage trou (1160), un deuxième passage trou (1120) et un deuxième passage inter-plaques de la première partie d'échange de chaleur (1100), le cinquième passage trou (1160) est en communication avec le deuxième passage trou (1120) par l'intermédiaire du deuxième passage inter-plaques de la première partie d'échange de chaleur (1100), et la première entrée (1001) est en communication avec le cinquième passage trou (1160) ; le passage d'écoulement du fluide de refroidissement comprend un septième passage trou (1260), un huitième passage trou (1270) et un deuxième passage inter-plaques de la deuxième partie d'échange de chaleur (1200), le septième passage trou (1260) est en communication avec le huitième passage trou (1270) par l'intermédiaire du deuxième passage inter-plaques de la deuxième partie d'échange de chaleur (1200), la deuxième entrée (1003) est en communication avec le septième passage trou (1260), et la deuxième sortie (1004) est en communication avec le huitième passage trou (1270) ; et
le long d'une direction d'empilage de la pluralité de plaques, la première sortie (1002) et la première entrée (1001) sont situées d'un côté de l'appareil de gestion de chaleur (1000), et la deuxième sortie (1004) et la deuxième entrée (1003) sont situées de l'autre côté, opposé, de l'appareil de gestion de chaleur (1000).

13. Appareil de gestion de chaleur (1000) selon la revendication 12, dans lequel l'appareil de gestion de chaleur (1000) comprend en outre une troisième sortie (1005) et une troisième entrée (1006), la troisième sortie (1005) est en communication avec le deuxième passage trou (1120), la troisième entrée (1006) est en communication avec le quatrième passage trou (1150) ; et la première sortie (1002), la première entrée (1001), la troisième sortie (1005) et la troisième entrée (1006) sont situées du même côté de l'appareil de gestion de chaleur (1000).

14. Système de gestion de chaleur, comprenant un appareil de gestion de chaleur, un compresseur (100) et un condenseur (200), dans lequel l'appareil de gestion de chaleur est l'appareil de gestion de chaleur (1000) selon l'une quelconque des revendications 1 à 13, l'appareil de gestion de chaleur comprend une première entrée (1001), une première sortie (1002), une deuxième sortie (1004) et une deuxième entrée (1003), une sortie du compresseur (100) est en communication avec la première entrée (1001) par l'intermédiaire du condenseur (200), la première sortie (1002) est en communication avec une entrée du compresseur (100), le système de gestion de chaleur comprend en outre un premier échangeur de chaleur (400) et une pompe (300), la deuxième sortie (1004) de l'appareil de gestion de chaleur est en communication avec la deuxième entrée (1003) par l'intermédiaire du premier échangeur de chaleur (400) et de la pompe (300).

15. Système de gestion de chaleur selon la revendication 14, dans lequel l'appareil de gestion de chaleur comprend en outre une troisième entrée (1006) et une troisième sortie (1005), le système de gestion de chaleur comprend un évaporateur et un élément d'étranglement (500), la troisième sortie (1005) est en communication avec la troisième entrée (1006) par l'intermédiaire de l'élément d'étranglement (500) et de l'évaporateur.
